(19) Europäisches Patentamt
European Patent Office
Office européen des brevets

(11) **EP 4 195 090 A1**

(12) **EUROPEAN PATENT APPLICATION**
published in accordance with Art. 153(4) EPC

(43) Date of publication:
**14.06.2023 Bulletin 2023/24**

(51) International Patent Classification (IPC):
***G06F 30/28*** (2020.01)

(21) Application number: **20948742.0**

(52) Cooperative Patent Classification (CPC):
**G06F 30/15; G06F 30/23; G06F 30/28;
G06N 10/20; G06N 10/60;** G06F 2111/10;
G06F 2113/08; G06F 2119/14

(22) Date of filing: **29.12.2020**

(86) International application number:
**PCT/CN2020/140833**

(87) International publication number:
**WO 2022/027916 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2020 CN 202010771592**

(71) Applicant: **Origin Quantum Computing
Technology Co., Ltd.
Hefei, Anhui 230088 (CN)**

(72) Inventors:
• **LI, Ye
Hefei, Anhui 230088 (CN)**
• **AN, Ningbo
Hefei, Anhui 230088 (CN)**

(74) Representative: **Dantz, Dirk
dantzhoehne. PATENT & RECHT
Kurfürstendamm 43
10719 Berlin (DE)**

(54) **COMPUTATIONAL FLUID DYNAMICS SIMULATION METHOD AND APPARATUS BASED ON QUANTUM ALGORITHM, AND DEVICE**

(57)    A computational fluid dynamics simulation method, apparatus based on a quantum algorithm and a device are disclosed. The method comprises: in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state (S11); constructing a third quantum circuit representing parameters of a linear system equation that represents a change of a fluid state of the grid cell based on the first quantum circuit, the second quantum circuit and the quantum random access memory (S12); solving, for all grid cells, the linear system equations of the grid cells based on the third quantum circuit, to obtain fluid states represented by the state parameters of the linear system equations of the grid cells as target states of the grid cells when the fluid states of the grid cells tend to be stable (S13). By means of this method, exponential acceleration can be achieved compared with the classical algorithm, which reduces the complexity of CFD simulations and increases the practicability thereof.

in a computational fluid dynamics analysis process using a finite volume method, constructing, for each grid cell in a discretized numerical grid for fluid movement, a first quantum circuit representing the coordinate information of the above-mentioned grid cell and a second quantum circuit representing the state parameters of the above-mentioned grid cell, wherein the state parameters of the above-mentioned grid cell are stored in a quantum random access memory, and the above-mentioned quantum random access memory can operate addresses and data in a quantum superposition state — S11

constructing a third quantum circuit representing the parameters of a linear system equation that represents the change of the fluid state of the above grid cell based on the above first quantum circuit, the above second quantum circuit and the above quantum random access memory — S12

solving, for all grid cells, the linear system equations of the above grid cells based on the above third quantum circuit, to obtain the fluid states represented by the state parameters of the linear system equations of the grid cells as the target states of the above grid cells when the fluid states of the above grid cells tend to be stable — S13

Fig. 4

## Description

The present application claims the priority to a Chinese patent application No. 202010771592.2 filed with the China National Intellectual Property Administration on August 4, 2020 and entitled "Computational Fluid Dynamics Simulation Method, Apparatus based on quantum algorithm, and Device", which is incorporated herein by reference in its entirety.

## Technical field

The present application relates to the technical field of quantum computing, in particular to a computational fluid dynamics simulation method and apparatus based on a quantum algorithm and a device.

## Background

CFD (Computational Fluid Dynamics) is a product of the combination of modern fluid mechanics, computational mathematics and computer science, and is an interdiscipline with strong vitality. It uses an electronic computer as a tool and applies various discrete mathematical methods to carry out numerical experiments, computer simulations and analytical studies on various problems in fluid mechanics in order to solve various practical problems. CFD simulation is a basic tool for simulating the aerodynamic design of an aircraft, from which the flow characteristics around the aircraft and the aerodynamic forces acting on the aircraft surface can be obtained. These calculations are computationally expensive, which makes it an urgent issue to seek for efficient CFD simulation algorithms.

In the prior art, in the process of simulating fluid movement by computational fluid dynamics, because the implicit scheme is unconditionally stable, it is necessary to solve the linear system $\mathcal{A}x=R$, where $\mathcal{A}$ is a coefficient matrix that must be inverted during the calculation. The calculation of the inverse of the matrix is very complex, and an iterative approach is needed. The dimension of the coefficient matrix is linearly related to the grid nodes. When the grid nodes are large in scale, classical algorithms such as Jacobi method, LU method or GMRES (Generalized Minimum Residual Method) are used to solve it. However, the calculation amount when classical calculation is performed to solve the coefficient matrix is very large, and CFD simulation would be very difficult to implement.

The inherent characteristic of quantum computing is quantum parallelism. In a Hilbert space (a complex linear space), the quantum state of N quantum bits is a vector, and every quantum operation is a transformation in this linear space. If a description of a practical problem is encoded as a quantum state vector of a set of quantum bits, the problem can be solved by executing an operation in parallel to process the vector without iterating the state of each quantum bit in the set of quantum bits. For example, if a matrix and a vector are multiplied, a for loop is no longer needed, and only a few quantum gates are required to operate on the input quantum states. Therefore, the parallelism of quantum computing can greatly increase the computational speed of CFD simulation. Therefore, it is hoped that CFD simulations are implemented using quantum computing.

## Summary

The embodiment of the present application aims to provide a computational fluid dynamics simulation method and apparatus based on a quantum algorithm and a device, so as to achieve CFD simulations using quantum computing. The specific technical solutions are as follows.

In a first aspect, embodiments of the present application provide a computational fluid dynamics simulation method based on a quantum algorithm, which includes:

in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state;

constructing a third quantum circuit representing parameters of a linear system equation that represents a change of a fluid state of the grid cell based on the first quantum circuit, the second quantum circuit and the quantum random access memory;

solving, for all grid cells, the linear system equations of the grid cells based on the third quantum circuit, to obtain fluid states represented by the state parameters of the linear system equations of the grid cells as target states of the grid cells when the fluid states of the grid cells tend to be stable.

In a second aspect, embodiments of the present application provide a computational fluid dynamics simulation apparatus based on a quantum algorithm, which includes:

a grid quantum circuit construction module configured for, in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state;

a parameter quantum circuit construction module configured for constructing a third quantum circuit representing parameters of a linear system equation that represents a change of a fluid state of the grid cell based on the first quantum circuit, the second quantum circuit and the quantum random access memory;

a target state obtaining module configured for solving, for all grid cells, the linear system equations of the grid cells based on the third quantum circuit, to obtain fluid states represented by the state parameters of the linear system equations of the grid cells as target states of the grid cells when the fluid states of the grid cells tend to be stable.

In a third aspect, embodiments of the present application provide a quantum computer device, which includes a quantum circuit, a device based on a quantum effect, and a quantum random access memory, and implements any computational fluid dynamics simulation method based on a quantum algorithm while running.
In a fourth aspect, embodiments of the present application provide a computer-readable storage medium having stored therein a computer program that, when executed by a processor, causes the processor to perform any of the computational fluid dynamics simulation methods based on a quantum algorithm.
Embodiments of the present application provide a computational fluid dynamics simulation method and apparatus based on a quantum algorithm and a device, which involves, in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state; constructing a third quantum circuit representing parameters of a linear system equation that represents a change of a fluid state of the grid cell based on the first quantum circuit, the second quantum circuit and the quantum random access memory; solving, for all grid cells, the linear system equations of the grid cells based on the third quantum circuit, to obtain fluid states represented by the state parameters of the linear system equations of the grid cells as target states of the grid cells when the fluid states of the grid cells tend to be stable, which implements CFD simulations using quantum computing. The inherent characteristic of quantum computing is quantum parallelism, by means of which exponential acceleration can be achieved compared with the classical algorithm, which reduces the complexity of CFD simulations and increase the practicability thereof. Of course, it is not necessary for any product or method implementing the present application to achieve all the advantages mentioned above at the same time.

**Brief Description of the Drawings**

In order to more clearly illustrate the embodiments of the present application and the technical solutions of the prior art, the drawings needed in the embodiments and the prior art are briefly described below. Obviously, the drawings in the following description are only some embodiments of the present application, and for those skilled in the art, other drawings can be obtained from these drawings without any creative effort.

Fig. 1 is a schematic diagram of a discretized numerical grid in the related art;

Fig. 2 is another schematic diagram of a discretized numerical grid in the related art;

Fig. 3 is a graph of the relationship between iteration time and the number of grid cells in the related art;

Fig. 4 is a first schematic diagram of the computational fluid dynamics simulation method based on a quantum algorithm according to the embodiment of the present application;

Fig. 5 is a schematic diagram of a quantum circuit in an initial state according to the embodiment of the present application;

Fig. 6 is a schematic diagram of a digital version of the quantum circuit of $\vec{U}^0$ according to the embodiment of the present application;

Fig. 7 is a schematic diagram of the quantum circuit of *Oracle $O_b$* according to an embodiment of the present application;

Fig. 8 is a schematic diagram of the quantum circuit of *Oracle $O_i$* according to an embodiment of the present application;

Fig. 9 is a schematic diagram of the quantum circuit of Oracle $O_A$ according to an embodiment of the present application;

Fig. 10 is a schematic diagram of the quantum circuit of the quantum linear solver according to an embodiment of the present application;

Fig. 11 is a schematic diagram of a quantum circuit in the post-processing process according to an embodiment of the present application;

Fig. 12a is a schematic diagram of a classical model in the prior art;

Fig. 12b is a schematic diagram of the quantum-classical hybrid model according to the embodiment of the present application;

Fig. 13 is a second schematic diagram of computational fluid dynamics simulation method based on a quantum algorithm according to the embodiment of the present application;

Fig. 14 is a graph of the relationship between the number of grid cells and the number of quantum bits according to the embodiment of the present application;

Fig. 15 is a schematic diagram of the quantum circuit of the QDAC algorithm according to the embodiment of the present application;

Fig. 16a is a schematic diagram of the quantum circuit of the real QADC algorithm according to the embodiment of the present application;

Fig. 16b is a schematic diagram of a quantum circuit for phase estimation according to an embodiment of the present application;

Fig. 16c is a schematic diagram of the quantum circuit of the Q part of the quantum circuit of the real QADC according to the embodiment of the present application;

Fig. 17a is a schematic diagram of a quantum circuit for T according to the embodiment of the present application;

Fig. 17b is a schematic diagram of a quantum circuit for K according to the embodiment of the present application;

Fig. 17c is a schematic diagram of a quantum circuit for W according to the embodiment of the present application;

Fig. 18 is a schematic diagram of a computational fluid dynamics simulation apparatus based on a quantum algorithm according to an embodiment of the present application.

## Detailed Description

In order to make the purpose, technical solutions and advantages of the present application clearer, the present application will be further explained in detail with reference to the attached drawings and embodiments. Obviously, the described embodiments are only part of the embodiments of the present application, but not all of them. Based on the embodiments in the present application, all other embodiments obtained by those ordinary skilled in the art without creative effort fall within the protection scope of the present application.

Overview of the application: CFD simulation is a basic tool for aircraft aerodynamic design, from which the flow characteristics around the aircraft and the aerodynamic forces acting on the aircraft surface can be obtained. CFD problems are usually associated with solving a series of equations by numerical methods. Among them, the CFD solver needs to perform time integration of the partial derivative equation, so it needs to use time increment to iterate to calculate the change of the system, and stop when the system becomes stable. In this problem setting, SU2 (The Stanford University Unstructured Suite, a high-precision partial differential equation solver developed by Stanford University) is generally used in classical algorithms. In CFD simulation, starting from the mathematical model, the following elements need to be defined, including: numerical grid, discretization method, numerical scheme and solution.

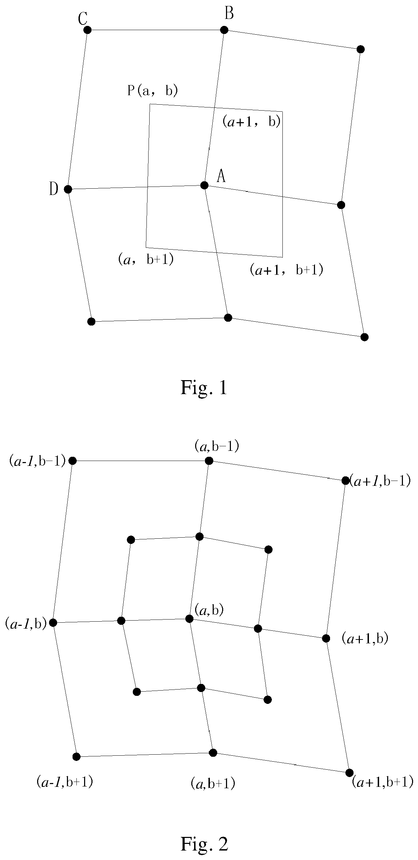

Numerical grid: a grid is a discrete representation of the continuous space domain of for solving problems. Each spatial point is considered as a node, and a volume defined by a set of adjacent nodes defines a grid cell. In the case of a structured grid, each node and grid cell is uniquely identified by a set of indexes, for example, it can be represented as (a, b) in a two-dimensional case, where a and b denote the abscissa and the ordinate in the two-dimensional space, respectively. For example, as shown in Fig. 1, a grid with known coordinates is composed of a set of grid nodes (A, B, C, D, ...), and the coordinate of the control volume center (also called cell) is P (a, b). Unstructured grids are usually consist of tetrahedral elements, and require a connectivity list, which specifies the way a given set of nodes form a cell.

Discretization method: the standard method for solving the above fluid dynamics equations is FVM (Finite volume method). In the FVM method, the numerical grid is divided into multiple grid cells, the local volume associated with each grid cell is considered, and the integral conservation law is applied. This law shows that the changes of all variables U of the fluid in a volume $\Omega$ depend only on the flux F on its surface S. The FVM may automatically satisfy the conservation property of fluid dynamics equations. This conservation equation may be written as follows:

$$\frac{\partial}{\partial t} \int_{\Omega} U d\Omega + \oint_{S} F dS = 0 \qquad (1)$$

Numerical scheme: After the discretization of continuous space domain, the mathematical operator of the equation to be solved must also be discretized. This approximation of the equation is achieved by a numerical scheme. Two types of numerical schemes are considered: time integration scheme and space scheme. The time integration scheme refers to the integral modeling of the time of variables to be solved from the initial state of the fluid, while the space scheme represents the spatial gradients of these variables to be solved.

Solution: Once a discrete problem and a numerical scheme are established, an algebraic equation system must be solved. Depending on the nature of the scheme, an iterative method is required.

An effective method to solve the conservation equation of formula (1) is FVM. Based on the discretization numerical scheme and solution introduced above, it is necessary to solve the spatial numerical grid. In two-dimensional space, each spatial point is a node, identified by a set of indexes. The set of nodes connected by the nearest neighboring nodes forms a grid, for example, as shown in Fig. 2, a quadrilateral grid composed of nodes (a, b), (a, b+1), (a+1, b) and (a+1, b+1). The midpoint of the line between two adjacent nodes and the center of adjacent grids determine the cells around a node, such as an octagonal cell centered on node (a, b) in Fig. 2. The conservation equation is applied to each cell of the grid, that is, the grid cell. In the discrete representation of formula (1), the differential operation is replaced by numerical approximation, and the implicit Euler scheme is selected to deal with time differentiation. Formula (1) is discretized as:

$$\frac{\Omega}{\Delta t}\left(U^{n+1} - U^{n}\right) = -b^{n+1}\left(U^{n+1}\right) \qquad (2)$$

$U^{n}$ is the fluid state of all grid cells at the $n^{th}$ moment (the $n^{th}$ integration), $U^{n} = \{U_i\}$, $i = 0,1,2, ..., N$ -1, and $U_i = (\rho, \rho u, \rho v, \rho E)_i$, represents the fluid state of the $i^{th}$ grid cell, $\rho$ represents the fluid density, u and v represent two components of the fluid velocity in two-dimensional coordinates, E represents the total energy per unit mass of fluid, and $b^{n}(U^{n})$ represents the residual quantity at the $n^{th}$ moment, and it is a function related to $U^{n}$.

Let $\Delta U^{n} = U^{n+1} - U^{n}$, then:

$$b^{n+1}\left(U^{n+1}\right) = b^{n+1}(U^{n} + \Delta U^{n}) = b^{n}(U^{n}) + \frac{\partial b}{\partial U}\Delta U^{n} \qquad (3)$$

Substitute formula (3) into formula (2) to get:

$$\left(\frac{\Omega}{\Delta t}\delta_{i,i'}\delta_{j,j'} + \frac{\partial b}{\partial U}|_{U=U^n}\right)\Delta U^n = -b^n(\mathrm{U}^n) \qquad (4)$$

Where $\delta_{i,i'}\delta_{j,j'}$ is the parameter related to the coordinate information of the grid cell.

In addition, $\left(\frac{\Omega}{\Delta t}\delta_{i,i'}\delta_{j,j'} + \frac{\partial b}{\partial U}|_{U=U^n}\right) = A(U^n)$, formula (4) is equivalent to:

$$A(U^n)\Delta \mathrm{U}^n = -b^n(\mathrm{U}^n) \qquad (5)$$

Wherein, $A(U^n)$ represents the coefficient matrix at the $n^{th}$ moment, and it is a function related to $U^n$.

$A(U^n)$ is abbreviated as $A^n$, and $-b^n(U^n)$ is abbreviated as $b^n$, thus obtaining an iterative problem that needs to solve a linear system: $A^n\Delta U^n = b^n$.

When the number of grid cells is N, then the dimension of $U^n$ is 4N, when solving, get the initial fluid state of these N grid cells to get $U^0$, perform calculations based on $U^0$ to get $A^0$, $b^0$, solve $A^0 (U^1 - U^0) = b^0$ to get $U^1$, then calculate $A^1$, $b^1$ to get $U^2$, and keep iterating. The iteration stops under the condition that $b^n$ converges to 0. In this case, it is necessary to use the method of solving the linear system in the form of $A^n\Delta U^n = b^n$ in which $\Delta U^n = U^{n+1} - U^n$.

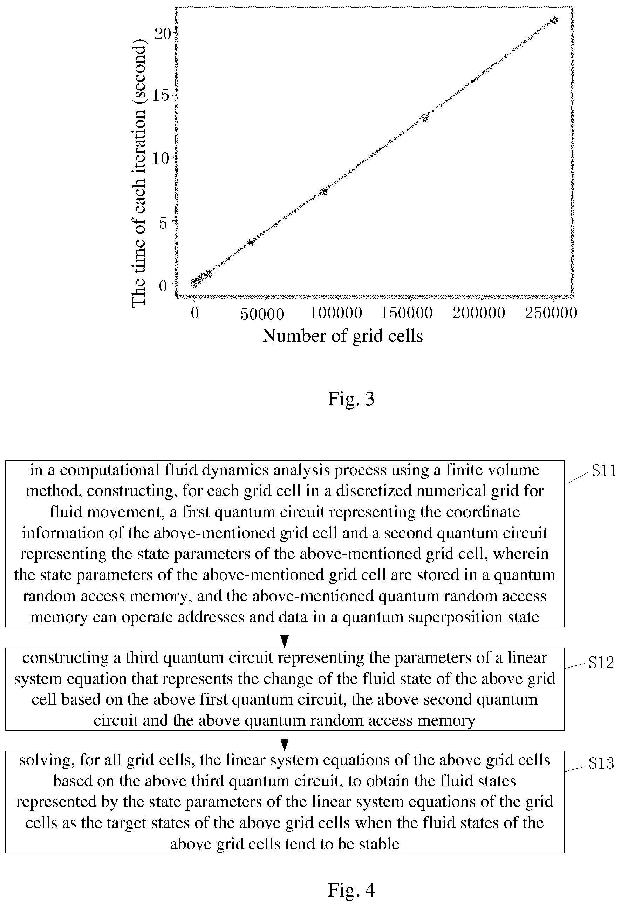

In the classical scheme, the implicit Euler solver has linear complexity and $A^n$ is a sparse matrix, which must be inverted in the calculation process. The calculation of the inversion for this matrix is very complex, and requires an iterative method. The classical solving method uses a multiple grid method, and the dimension of the sparse matrix is linearly related to the grid nodes with a complexity of O(N), where N is the number of grid cells. In classical schemes, there is a good linear relationship between the running time and the number of grid cells, as in Fig. 3. When the grid nodes are large in scale, it will be very difficult to implement using classical algorithms such as Jacobi method, LU method or GMRES (Generalized Minimum Residual Method).

In view of this, in order to reduce the complexity of CFD simulation and increase the practicability of CFD simulation, the embodiment of the present application provides a computational fluid dynamics simulation method based on a quantum algorithm, which includes: in a computational fluid dynamics analysis process using a finite volume method, constructing, for each grid cell in a discretized numerical grid for fluid movement, a first quantum circuit representing the coordinate information of the grid cell, a second quantum circuit representing the state parameters of the grid cell, wherein the state parameters of the grid cell are stored in a quantum random access memory, and the quantum random access memory can operate addresses and data in a quantum superposition state; constructing a third quantum circuit representing the parameters of a linear system equation that represents the change of the fluid state of the grid cell based on the first quantum circuit, the second quantum circuit and the quantum random access memory; solving, for all grid cells, the linear system equations of the grid cells based on the third quantum circuit, to obtain the fluid states represented by the state parameters of the linear system equations of the grid cells as the target states of the grid cells when the fluid states of the grid cells tend to be stable.

The inherent characteristic of quantum computing is quantum parallelism. In a Hilbert space (a complex linear space), the quantum state of N quantum bits is a vector, and each quantum operation is a transformation in this linear space. If the description of a real problem is encoded as a quantum state vector of a set of quantum bits, the vector can be processed by executing an operation in parallel to achieve the solution of the problem without iterating the state of each quantum bit in the set of quantum bits. For example, if the matrix and vector are multiplied, the for loop is no longer needed, but only a few quantum gates are required to operate on the input quantum state. In the embodiment of the present application, the CFD simulation is realized by using quantum computing, using which exponential acceleration can be achieved compared with the classical algorithm, so as to reduce the complexity of CFD and the computational time of CFD, and increase practicability of CFD.

Detailed description is made below.

First, the symbols in the embodiment of the present application are explained.

N: the number of grid cells. $\mathrm{m} = \lceil \log_2(4\mathrm{N}) \rceil$ represents the number of quantum bits used to encode the initial state of all grid cells.

$q_f$: the number of quantum bits expressed in floating-point numbers.

ITimes: the number of iterations.

$U_i = (\rho, \rho u, \rho v, \rho E)_i$, the variable (also called state parameter) of the $i^{th}$ grid cell, which also represent the fluid state of the $i^{th}$ grid cell, and there are 4 variables in total.

$U^n = \{U_i\}$, i = 0,1,2,..., $N$ - 1, $U^n$ represents all variables corresponding to the problem, and also represents the set of fluid states of all grid cells, with a dimension of 4N.

When the residual $b^n$ of a linear system equation $A^n \Delta U^n = b^n$ tends to 0, a stable solution may be obtained. Quantum algorithm is an effective method to solve such linear system. Quantum circuits can be built to complete the calculations. Referring to Fig. 4, an embodiment of the present application provides a computational fluid dynamics simulation method based on a quantum algorithm, which includes:

S11, in a computational fluid dynamics analysis process using a finite volume method, constructing, for each grid cell in a discretized numerical grid for fluid movement, a first quantum circuit representing the coordinate information of the above-mentioned grid cell and a second quantum circuit representing the state parameters of the above-mentioned grid cell, wherein the state parameters of the above-mentioned grid cell are stored in a quantum random access memory, and the above-mentioned quantum random access memory can operate addresses and data in a quantum superposition state.

The computational fluid dynamics simulation method based on a quantum algorithm according to the embodiment of the present application can be implemented by electronic devices with quantum computing capability, such as quantum computers, or by classical computers simulating quantum computing, or by classical computers combined with quantum computers.

The first quantum circuit is configured to represent the coordinate information of the grid cell, and the second quantum circuit is configured to represent the state parameters of the grid cell. For example, for the $i^{th}$ grid cell (or called grid cell i), $U_i = (\rho, \rho u, \rho v, \rho E)_i$, the first quantum circuit is configured to represent the coordinate information associated with i, and the second quantum circuit is configured to represent $(\rho, \rho u, \rho v, \rho E)$.

The state parameters of grid cells are stored in the QRAM (Quantum Random Access Memory), which is a quantum simulation of classical random access memory and a structure that can effectively store and load quantum information. Quantum random access memory can operate addresses and data in a quantum superposition state, and the QRAM operates addresses in superposition state. When the addresses are in the superposition state, the data in the QRAM can be effectively acquired. In a possible implementation, a preset mapping relationship between addresses and data is stored in the above quantum random access memory, wherein the above addresses are encoded to be in a first superposition state, each eigenstate in the above first superposition state corresponds to one piece of address information, the above data is encoded to be in a second superposition state, and each eigenstate in the above second superposition state corresponds to one piece of data information. The QRAM in the embodiment of the present application can be realized in a quantum way or a classical computer simulation. The implementation of QRAM using classical computer simulation is known in the prior art, and will not be described here. In addition, it can also be realized by hardware circuit, etc., all of which are within the scope of protection of the present application.

S12, constructing a third quantum circuit representing the parameters of a linear system equation that represents the change of the fluid state of the above grid cell based on the above first quantum circuit, the above second quantum circuit and the above quantum random access memory.

The coordinate information of each grid cell can be obtained using the first quantum circuit, and the initial state parameters of each grid cell can be obtained using the second quantum circuit. Since the fluid state of the grid cell is represented by the state parameters, the initial fluid state of each grid cell can be obtained. The quantum random access memory can store the state parameters (including the initial state parameters and the state parameters after iteration) of each grid cell, therefore based on the first quantum circuit, the second quantum circuit and the quantum random access memory, a third quantum circuit representing the parameters of the linear system equation that represents the change of the fluid state of the grid cell can be constructed.

S13, solving, for all grid cells, the linear system equations of the above grid cells based on the above third quantum circuit, to obtain the fluid states represented by the state parameters of the linear system equations of the grid cells as the target states of the above grid cells when the fluid states of the above grid cells tend to be stable.

The fluid states of all grid cells can be iterated through the third quantum circuit. When the fluid states of the grid cells tend to be stable, that is, the residual $b^n$ tends to 0, the fluid state of the linear system equation of each grid cell at this time can be obtained, which is the target state of each grid cell.

Optionally, after obtaining the target state of each grid cell, the target state of the grid cell can be converted into an analog encoded state, and the above analog encoded state can be measured, so as to complete the computational fluid dynamics analysis of fluid movement.

The target state of the grid cell read from the quantum random access memory is a digital state (called quantum digital state), which needs to be converted into an analog encoded state (called quantum analog state). By measuring the analog encoded state, the classical data used to describe the fluid movement can be obtained, thus completing the computational fluid dynamics analysis of the subsequent fluid movement.

The digital encoded state of the quantum form of the target state of the grid cell is expressed as $|\vec{U}\rangle$ and stored in the QRAM. The classic information extraction process is as follows: firstly, read the digital encoded state $|\vec{U}\rangle$ from the QRAM, and then convert the digital encoded state into the analog encoded state $|\varphi\rangle = C \sum_{k=1}^{N} U_k |k\rangle$ by a QDAC

(Quantum Digital-to-Analog Converter) , where, $C = \sqrt{1/(\sum_{j=1}^{N} U_j^2)}$ . It can be understood that the analog encoded state refers to the state in which the digital information is encoded on the amplitude of the quantum state, while the digital encoded state refers to the state where the digital information is encoded on the quantum state itself (equivalent to a register). Finally, the classical information is extracted by measuring the analog encoded state $|\varphi\rangle$.

In the calculation process, N grid cells are needed. When the number N of the grid cells is very large, the fluid states of the grid cells may be optionally collected multiple times. In one sampling process, the fluid states of only $N_1$ grid cells in N grid cells can be sampled, so that the final output classical information can be obtained through multiple sampling processes. Assuming that the $j^{th}$ grid after dimensionality reduction contains $a_j$ original grids, which are sampled M times in total, and the $j^{th}$ grid appears $b_j$ times, the solution of the obtained $N_1$ grids can be expressed as: $u_{out} = (b_j/a_j)$,j = 0,1, $\cdots$, $N_1$ - 1. The sampling is finally done M times, since QDAC is a probabilistic operation, there is a probability $p = \sum_{j=1}^{N} U_j^2 / N$ that the digital information will be successfully converted into analog information, thus requiring M/p times of information extraction from the QRAM and M/p times of QDAC conversion.

The inherent characteristic of quantum computing is quantum parallelism. In the embodiment of the present application, the quantum parallelism of quantum computing is utilized, so that exponential acceleration can be achieved compared with the classical algorithm, so as to reduce the complexity of CFD simulation, reduce the computation time of CFD simulation, and increase the practicability of CFD simulation. When the fluid state of the grid cell tends to be stable, the target state of the grid cell, that is, the state of the fluid state in the grid cell, can be obtained, from which the flow characteristics around a device, such as an aircraft, a fan, a compressor or a hydraulic turbine, and the aerodynamic force acting on the surface of the device can be obtained, which is important for the design and operation simulation of the device.

In order to facilitate the design of quantum circuits and to clarify the functions of each quantum circuit, in a possible implementation, the above first quantum circuit includes a first Oracle and a second Oracle. The above first Oracle is configured to extract the number of adjacent grids of a specified grid cell, and the second Oracle is configured to extract the coordinate information of the grid cell.

The parameters related to the coordinates of grid cells are encoded into the first quantum circuit using a grid scheme. Two Oracles can be defined here, i.e., the first Oracle (hereinafter referred to as $O_{adjacent}$) and the second Oracle (hereinafter referred to as $O_{coor}$). Wherein, $O_{adjacent}$ is configured to extract the number of adjacent grids of a specified grid cell and can be expressed as:

$$O_{adjacent}|i\rangle|j\rangle = |i\rangle|g(i,j)\rangle \qquad (6)$$

Where: g(i.j) is the $j^{th}$ adjacent grid cell of the grid cell i.

$O_{coor}$ is configured to extract the coordinates of grid cells, which can be expressed as:

$$O_{coor}|i\rangle|0\rangle = |i\rangle|\vec{x_i}\rangle \qquad (7)$$

where $\vec{x_i}$ represents coordinate information related to the grid cell i, such as the coordinates of each vertex of the grid cell i. $O_{coor}$ can also be used to obtain other position information, such as the coordinates of the center of the grid cell i and the normal of each side of the grid cell i.

The numbers of quantum bits required to construct $O_{adjacent}$ and $O_{coor}$ are 2(m - 2),m - 2 + $C_0 q_f$ respectively, here $C_0 q_f$ is a quantum bit sequence, which represents the coordinate information and other position information obtained from the coordinates of the grid cell, and $C_0$ is a constant. The complexity of constructing $O_{adjacent}$ and $C_{coor}$ depends on the complexity of the grid scheme. Where the complexity can be expressed as $\mathcal{O}(poly(\log(N)))$ , that is, the complexity of $O_{adjacent}$ and $O_{coor}$ is expressed as $\mathcal{O}(poly(\log(N)))$ .

In the embodiment of the present application, the first quantum circuit includes a first Oracle and a second Oracle. The first Oracle is configured to extract the number of adjacent grids of a specified grid cell, and the second Oracle is configured to extract the coordinate information of the grid cell. The functions of the first quantum circuit are assigned to the first Oracle and the second Oracle for implementation, so that the functions of each part are clarified, which facilitates the design and application of the quantum circuit.

In the process of data conversion, two forms of state parameters are required, i.e., a quantum digital state and an analog encoded state. In a possible implementation, the above second quantum circuit includes a second analog state quantum circuit that extracts the state parameters of the above grid cell through the amplitudes of the quantum states, and a second digital state quantum circuit that extracts the state parameters of the above grid cell through the eigenstates of the quantum states.

The second quantum circuit includes a second analog state quantum circuit and a second digital state quantum circuit. The second analog state quantum circuit is configured to extract, through the amplitudes of the quantum states, the state parameters of the above grid cell, that is, the state parameters used for representing the analog encoded state. The second digital state quantum circuit is configured to extract, through the eigenstates of the quantum states, the state parameters of the above grid cell , that is, the state parameters used for representing the digital states.

In the process of solving using FVM, the initial values of the state parameters $U_i$ of each grid cell can be considered the same, and can be expressed as $U_i = (x_0, x_1, x_2, x_3)$, where $x_0, x_1, x_2, x_3$ are the specific values of $\rho$, $\rho u$, $\rho v$, $\rho E$ respectively, the initial states $U^0$ of all grid cells can be expressed as:

$$|\vec{U}^0\rangle = C_0 \sum_{i=0}^{4N-1} x_j |i\rangle \qquad (8)$$

where: $j = i \bmod 4$, that is, take a remainder when i is divided by 4. And finally xj is one of x0, x1, x2 and x3.

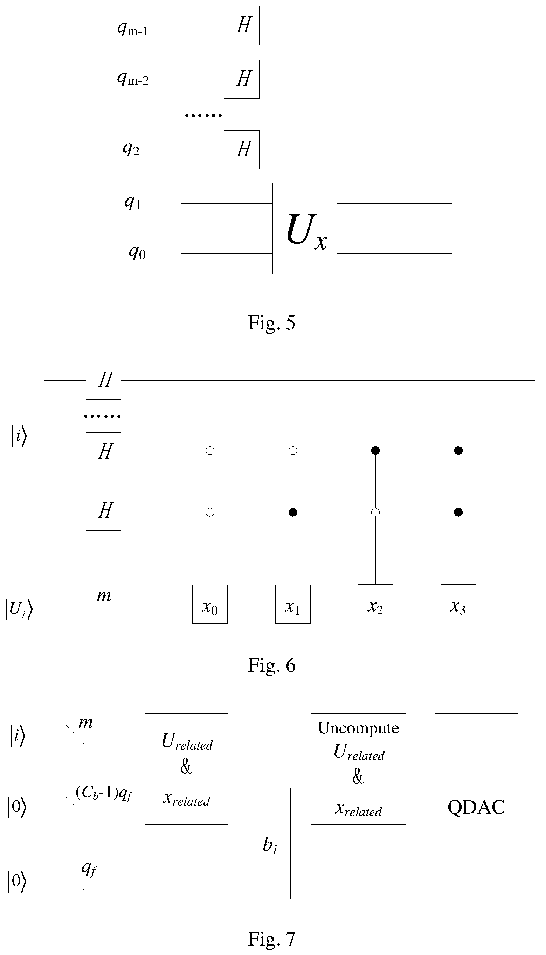

$C_0 = \dfrac{1}{\sqrt{N \sum_{i=0}^{3} x_i^2}}$ , $|\vec{U}^0\rangle$ is a representation of the analog encoded state of $U^0$, and can be prepared by quantum circuits as shown in Fig. 5.

Similarly, it is possible to construct $\vec{U}^0$ in a digital version, i.e.,

$$|\vec{d}_U^0\rangle = \sum_i |i\rangle |U_i\rangle \qquad (9)$$

Where $|\vec{d}_U^0\rangle$ is the representation of $U^0$ in a digital state, and the corresponding quantum circuit can be shown in Fig. 6. $|\vec{d}_U^0\rangle$ can be stored in a QRAM, which is defined as follows:

$$M_U \frac{1}{\sqrt{4N}} \sum_i |i\rangle |0\rangle = \frac{1}{\sqrt{4N}} \sum_i |i\rangle |U_i\rangle \qquad (10)$$

$M_U$ in the above equation, as a data memory that stores the state variables of the grid cell parameters, is a quantum random access memory QRAM with the function of a quantum logic gate, and $M_U$ can operate on a superposition state. It should be noted that the above QRAM is a structure that can effectively store and load quantum information. QRAM encodes both addresses and data on quantum bits, and can represent the addresses through the superposition state of quantum bits, so it can operate addresses in the superposition state. QRAM enables parallel loading and storage of quantum data in a digital form with time complexity O(logN). Where time complexity O(logN) indicates that when the data increases by N times, the time consumption increases by logN times, where the log can be in the base of 2.

From the above description, it can be seen that the linear system equation can be: $A^n \Delta U^n = b^n$, whose parameters are the coefficient matrix $A^n$ and the residual quantity $b^n$ at the current moment, so the function of the third quantum circuit can be further divided.

In a possible implementation, the above linear system equation is: $A^n \Delta U^n = b^n$ where: $\Delta U^n = U^{n+1} - U^n$; Where: n represents the $n^{th}$ moment of recording the fluid state; $U^n$ represents the fluid states of the grid cells at the $n^{th}$ moment, $U^n = \{U_i\}$, $i = 0,1,2, ..., N - 1$, and U, represents the fluid state of the grid cell i; $A^n$ represents the coefficient matrix at the $n^{th}$ moment, and $A^n = \{A(U^n, \hat{M})\}$, representing that $A^n$ is a function associated with $U^n$, $\hat{M}$, $b^n$ represents the residual quantity at the $n^{th}$ moment, and $b^n = \{b(U^n,\hat{M})\}$, representing that $b^n$ is a function associated with $U^n$, $\hat{M}$, N is the number of grid cells in total and $\hat{M}$ is the coordinate information of the above grid cells.

The parameters of the above linear system equation include the coefficient matrix $A^n$ at the current moment and the residual quantity $b^n$ at the current moment; the above third quantum circuit includes *Oracle $O_A$* corresponding to the above coefficient matrix $A^n$ and *Oracle $O_b$* corresponding to the above residual quantity $b^n$; The coefficient matrix is a sparse matrix, and when i and j are adjacent, the element $A_{ij}$ is non-zero; the above Oracle $O_A$ is configured to extract the element $A_{ij'}$ of the coefficient matrix $A^n$ at the current $n^{th}$ moment, wherein, $A_{ij'}$ represents the $j'^{th}$ element in the $i'^{th}$ row of the coefficient matrix; $A^n = \{A_{ij'}\}$, $i' = 4i + i_1$; $j' = 4j + j_1$, $i,j = 0,1,2, ...,N - 1$; $i_1,j_1 \in [0,3]$ and are integers; for the $j^{th}$ adjacent grid cell of the grid cell i, the above *Oracle* $O_A$ has an effect of $O_A |i\rangle|j\rangle = |i\rangle|j\rangle|A_{ij'}\rangle$; the above *Oracle* $O_b$ is configured to extract the element $b_i$ of the residual quantity $b^n$ at the current $n^{th}$ moment, wherein, $b_i$ represents the residual quantity of the grid cell i; $b^n = \{b_i\}$, $i = 0,1,2, ..., N - 1$, for the grid cell i, the above *Oracle* $O_b$ has an effect of $O_b |0\rangle = \Sigma_i b_i |i\rangle$.

The effect of *Oracle* $O_b$ on the initial fluid state , i.e. $|0\rangle$ state, of a grid cell is $O_b |0\rangle = \Sigma_i b_i |i\rangle$, $b_i$ represents the residual quantity of the grid cell i, which is a function of the state parameters and coordinates of the $\lfloor i/4\rfloor^{th}$ grid cell and its neighboring grid cells, and the expressions of these functions are regular, specifically, the expression of $b_i$ is only related to $i\ mod\ 4$, so $b_i$ can be effectively constructed, where mod represents the remainder operation. A possible quantum circuit diagram for *Oracle* $O_b$ can be shown in Fig. 7.

Firstly, the related state parameters and coordinates are obtained: $|i\rangle|U_{related}\rangle|X_{related}\rangle$, $X_{related}$ represents the coordinate information of the related grid cells and $U_{related}$ represents the state parameter information corresponding to the related grid cells.

Then, $b_i$ is calculated to get: $|i\rangle|U_{related}\rangle|X_{related}\rangle|b_i\rangle$.

Here, it is not necessary to calculate $|U_{related}\rangle$ and $|X_{related}\rangle$, $|i\rangle|b_i\rangle$, because it is an auxiliary state constructed to calculate the target state, and QDAC can be used to operate and complete the process of $\Sigma_i b_i |i\rangle$.

In this process, the number of quantum bits required is $m + C_b q_f$, m is a constant, which indicates the number of spare quantum bits, and $C_b q_f$ is an auxiliary quantum bit sequence used to calculate $b_i$; it can also be used for QDAC quantum circuits. Assuming that the success rate of QDAC is $p_{QDAC}$, the number of times when $M_U, O_{adjacent}$ and $O_{coor}$ are used is $O(1/p_{QDAC})$. The complexity of quantum logic gates is $O(\text{poly}(m)/\ p_{QDAC} + \text{poly}(1/\epsilon p_{QDAC}))$, where $\in$ represents the accuracy of the QDAC.

A possible way of constructing *Oracle* $O_b$ is described below. In a possible implementation, constructing the third quantum circuit representing the parameters of a linear system equation that represents the change of the fluid state of the above grid cell based on the above first quantum circuit, the above second quantum circuit and the above quantum random access memory, includes:

Step A, for the residual quantity $b_i$ corresponding to the grid cell $i$ included in $b^n$, obtaining the related grid cells of the grid cell $i$.

Step B, obtaining the coordinate information of the above related grid cells as first related coordinate information $X_{related}$ based on the above second Oracle.

Step C, obtaining the state parameter information corresponding to the related grid cells as a first related state parameter $U_{related}$ based on the above second quantum circuit and the above quantum random access memory.

Step D, constructing a first sub-quantum circuit *Oracle* $O_{b1}$ for simultaneously encoding the above first related coordinate information and the above first related state parameter, wherein *Oracle* $O_{b1}$ is configured to implement:

$$|i\rangle|0\rangle|0\rangle \rightarrow |i\rangle|U_{related}\rangle|X_{related}\rangle$$

Step E, obtaining $b_i(X_{related}, U_{rlated})$ based on $U_{rlated}$ and $X_{related}$.

Step F, constructing a second sub-quantum circuit *Oracle* $O_{b2}$ for encoding $b_i(X_{related}, U_{related})$, wherein *Oracle* $O_{b2}$ is configured to implement $|i\rangle|U_{related}\rangle|X_{related}\rangle|0\rangle \rightarrow i\rangle|U_{related}\rangle|X_{related}\rangle|b_i\rangle$.

Step G, constructing a third sub-quantum circuit *Oracle* $O_{b3}$, wherein the above third sub-quantum circuit *Oracle* $O_{b3}$ is the transposed conjugate quantum circuit of the above first sub-quantum circuit *Oracle* $O_{b1}$, and *Oracle* $O_{b3}$ is configured to implement $|i\rangle|U_{related}\rangle|X_{related}\rangle|b_i\rangle \rightarrow |i\rangle|0\rangle|0\rangle|b_i\rangle$.

Step H, constructing a fourth sub-quantum circuit *Oracle* $O_{b4}$ for quantum state transformation, wherein *Oracle* $O_{b4}$ is configured to implement $|i\rangle|0\rangle|0\rangle|b_i\rangle \rightarrow b_i|i\rangle$.

Step I, constructing *Oracle* $O_b$ based on the above first sub-quantum circuit *Oracle* $O_{b1}$, the above second sub-quantum circuit *Oracle* $O_{b2}$, the above third sub-quantum circuit *Oracle* $O_{b3}$ and the above fourth sub-quantum circuit *Oracle* $O_{b4}$.

It should be noted that it is only a possible way to construct *Oracle* $O_b$ with the help of the above first sub-quantum circuit *Oracle* $O_{b1}$, the above second sub-quantum circuit *Oracle* $O_{b2}$, the above third sub-quantum circuit *Oracle* $O_{b3}$ and the above fourth sub-quantum circuit *Oracle* $O_{b4}$. On the one hand, there is no strict restriction on the sequential steps of the above first sub-quantum circuit *Oracle* $O_{b1}$, the above second sub-quantum circuit *Oracle* $O_{b2}$, the above third sub-quantum circuit *Oracle* $O_{b3}$ and the above fourth sub-quantum circuit *Oracle* $O_{b4}$; on the other hand, each sub-quantum circuit is essentially a quantum state evolution operation to achieve a certain function, that is, equivalent to a quantum logic gate. In specific application scenarios, quantum logic gates may operate on different quantum states used to describe specific application scenarios and/or the preset quantum states of auxiliary quantum bits. It is more intuitively understood that the selection and setting of the initial quantum state is not unique, which conforms to the superposition characteristics of quantum states and is also based on the convenience of occupying and releasing quantum bit resources, which can be set on demand by those skilled in the art. Exemplarily, during the implementation of $|i\rangle|U_{related}\rangle|X_{related}\rangle|0\rangle \rightarrow i\rangle|U_{related}\rangle|X_{related}\rangle|b_i\rangle$, the initial state may be set to be other states before $||i\rangle|U_{related}\rangle|X_{related}\rangle|0\rangle$, for example, the initial state is $|i\rangle|U_{related}\rangle|X_{related}\rangle|1\rangle$. At this time, in order to implement the reversible operation of the quantum state evolution operation, it is necessary to release quantum bit resources through additional quantum circuits.

In this embodiment, it is preferable to set the initial state as $|i\rangle|U_{related}\rangle|X_{related}\rangle|0\rangle$, which, on the one hand, can reduce the complexity of the preparation of the initial state of the quantum state, and on the other hand, can reduce the encoding complexity of a quantum circuit in the process of realizing the reversible operation of the functional quantum state evolution operation, and can simplify the quantum circuit arrangement on the whole.

Similarly, the settings of the above other function *Oracle* also satisfy the requirements of simple and convenient optimization settings of the above quantum circuits. Therefore, it can be understood that the steps A to I provided above are only one possible way to construct *Oracle* $O_b$. The effect of *Oracle* $O_A$ on the fluid state of the grid cell may be:

$$O_A|i\rangle|j\rangle|z\rangle = |i\rangle|j\rangle|z \oplus A_{i'j'}\rangle \qquad (11)$$

$A_{ij'}$ is an element of the coefficient matrix, $\oplus$ is the XOR symbol, and Z is a user-defined binary number, which may be 0. At this time, the formula (11) may be expressed as: $O_A|i\rangle|j\rangle = |i\rangle|j\rangle|A_{ij'}\rangle$.

The coefficient matrix $A_{ij'}$ is expressed as:

$$A_{4i_0+i_1,4j_0+j_1} = f_{i_0,i_1,j_0,j_1}(U_{i_0},U_{j_0},X_{i_0},X_{j_0}) \qquad (12)$$

$i_0$, $j_0$, respectively represent the serial numbers of grid cells *i, j*, that is, the specific values of *i, j*, and each grid cell has four state parameters, $i_1$, $j_1$ are integers ranging from 0 to 3 (including 0 and 3), and respectively represent the four state parameters of grid cells $i_0$, $j_0$. $U_{i0}$ represents the state parameter in the grid cell $i_0$,

$U_{j0}$ represents the state parameter in the grid cell $j_0$; $X_{i0}$ represents the position coordinates related to grid cell $i_0$, $Xj0$ represents the position coordinates related to grid cell $j_0$.

Here, the forms of function $f_{i0,i1,j0,j1}$ are regular for different $i_0$, $i_1$, $j_0$, $j_1$, and they can be divided into two types: $i_0 = j_0$ and $i_0 \neq j_0$, and for different $i_1$ and $j_1$, each type contains 16 cases, so that $O_A$ can be effectively constructed.

To calculate $A_{4i0+i1,4j0+j1}$, first construct:

$$|4i_0 + i_1, 4j_0 + j_1\rangle|U_{i_0},U_{j_0},X_{i_0},X_{j_0}\rangle \qquad (13)$$

Then $f_{i0,i1,j0,j1}(U_{i0}, U_{j0}, X_{i0}, X_{j0.})$ is the arithmetic expression of $U_{i0}U_{j0}X_{i0}X_{j0}$, thus obtaining:

$$|4i_0 + i_1, 4j_0 + j_1\rangle|U_{i_0},U_{j_0},X_{i_0},X_{j_0}\rangle|f_{i_0,i_1,j_0,j_1}(U_{i_0},U_{j_0},X_{i_0},X_{j_0})\rangle \qquad (14)$$

Since $U_{i0}U_{j0}X_{i0}X_{j0}$ and $|4i_0 + i_1, 4j_0 + |j_1\rangle|0,0,0,0\rangle|f_{i0,i1,j0,j1}(U_{i0},U_{j0},X_{i0},X_{j0})\rangle$ are auxiliary states constructed to calculate the target state, it is unnecessary to calculate them.

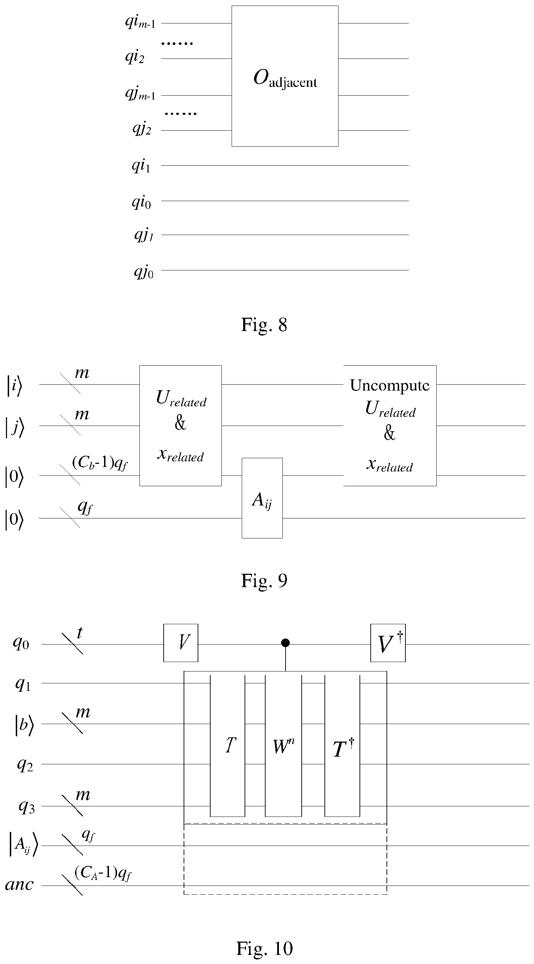

Thereby *Oracle* $O_A$ is realized, and the corresponding quantum circuit thereof is shown in Fig. 8. The required number of quantum bits is 2m + $C_A q_f$, $C_A q_f$ is the auxiliary quantum bit sequence used to calculate $A_{ij}$. The complexity of quantum logic gate is $\mathcal{O}(\mathrm{poly}(m))$ , and the expression of $A_{ij}$ is more complex than $b_i$, so $C_A \geq C_b$.

A possible way of constructing *Oracle $O_A$* is described below. In a possible implementation, constructing a third quantum circuit representing the parameters of a linear system equation that represents the change of the fluid movement state of the above grid cell based on the above first quantum circuit, the above second quantum circuit and the above quantum random access memory, includes:

Step 1, for the coefficient matrix $A_{i'j'}$ included in $A^n$, obtaining the grid number $g(i,j)$ of the $j^{th}$ adjacent grid cell of the grid cell i based on the above first Oracle, where $g(i,j)$ is a function of the state parameters and the coordinate information of the grid cell.

Step 2, constructing the column number $f(i,j)$ of the $j^{th}$ non-zero element in the $i^{th}$ row of $A_{i'j'}$ based on the grid number $g(i,j)$ of the $j^{th}$ adjacent grid cell of the grid cell i; where $f(i,j)=4_g\left(\left\lfloor\frac{i}{4}\right\rfloor,\left\lfloor\frac{j}{4}\right\rfloor\right)+j\%4$ ; where: $f(i,j)$ is a function of the state parameters and coordinate information of the grid cell, % represents a remainder operation, and ⌊ ⌋ represents a RoundDown symbol.

Here, there is a trick to construct the quantum circuits, as shown in Fig. 9. One can simply perform the first Oracle operation on the highest log(N) quantum bit of i and j, and then construct $O_I$ in the whole space of $|i\rangle$ and $|j\rangle$, where the effect of $O_I$ on the grid cell state can be written as: $O_I|i\rangle|j\rangle = |i\rangle|f(i,i)\rangle$, the number of quantum bits required in this process is 2m.

Step 3, obtaining $A_{ij}$ according to $f(i,j)$, wherein:

$$A_{i'j'} = A_{4i_0+i_1,4j_0+j_1} = f_{i_0,i_1,j_0,j_1}(U_{i_0,}U_{j_0,}X_{i_0,}X_{j_0})$$

;

$i_0$, $j_0$, respectively represent the serial numbers of grid cells *i, j*, each grid cell has four state parameters, $i_1$, $j_1$ range from 0 to 3, and respectively represent the four state parameters of the grid cells $i_0$, $j_0$; $U_{i0}$ represents the state parameter in the grid cell $i_0$, $U_{j0}$ represents the state parameter in the grid cell $j_0$; $X_{i0}$ represents the position coordinates related to the grid cell $i_0$ , $X_{j0}$ represents the position coordinates related to the grid cell $j_0$.

Step 4, for $i_0$ and $j_0$, extracting the corresponding state parameters $U_{i0}$ and $U_{j0}$ thereof by using the above quantum random access memory; and extracting the corresponding coordinate information $X_{i0}$ and $X_{j0}$ thereof by using the above second Oracle.

Step 5, constructing a first sub-quantum circuit *Oracle $O_{A1}$* for simultaneously encoding the above coordinate information $X_{i0}$ and $X_{j0}$ and the above state parameters $U_{i0}$ and $U_{j0}$ wherein *Oracle $O_{A1}$* is configured to implement:

$$|i,j\rangle|0\rangle \rightarrow |4i_0 + i_1, 4j_0 + j_1\rangle|U_{i_0,}U_{j_0,}X_{i_0,}X_{j_0}\rangle$$

.

Step 6, constructing a second sub-quantum circuit *Oracle $O_{A2}$* for encoding $f_{i0,i1,j0,j1}(U_{i0}, U_{j0}, X_{i0}, X_{j0})$, wherein *Oracle $O_{A2}$* is configured to implement:

$$|4i_0 + i_1, 4j_0 + j_1\rangle|U_{i_0,}U_{j_0,}X_{i_0,}X_{j_0}\rangle|0\rangle \rightarrow$$

$$|4i_0 + i_1, 4j_0 + j_1\rangle|U_{i_0,}U_{j_0,}X_{i_0,}X_{j_0}\rangle|f_{i_0,i_1,j_0,j_1}(U_{i_0,}U_{j_0,}X_{i_0,}X_{j_0})\rangle$$

Step 7, constructing a third sub-quantum circuit *Oracle $O_{A3}$*, wherein the above third sub-quantum circuit *Oracle $O_{A3}$* is the transposed conjugate quantum circuit of the above first sub-quantum circuit *Oracle $O_{A3}$* , *Oracle $O_{A3}$* is configured to implement:

$$|4i_0 + i_1, 4j_0 + j_1\rangle|U_{i_0},U_{j_0},X_{i_0},X_{j_0}\rangle|f_{i_0 i_1 j_0 j_1}(U_{i_0},U_{j_0},X_{i_0},X_{j_0})\rangle \rightarrow |4i_0 + i_1, 4j_0 +$$

$$j_1\rangle|0\rangle|f_{i_0 i_1 j_0 j_1}(U_{i_0},U_{j_0},X_{i_0},X_{j_0})\rangle$$

Step 8, constructing *Oracle* $O_A$ based on the above first sub-quantum circuit *Oracle* $O_{A1}$, the above second sub-quantum circuit *Oracle* $O_{A2}$ and the above third sub-quantum circuit *Oracle* $O_{A3}$.

Similar to the above discussion that it is only a possible way to construct *Oracle* $O_b$ with the help of the above first sub-quantum circuit *Oracle* $O_{b1}$, the above second sub-quantum circuit *Oracle* $O_{b2}$, the above third sub-quantum circuit *Oracle* $O_{b3}$ and the above fourth sub-quantum circuit *Oracle* $O_{b4}$, the process of constructing O*racle* $O_A$ based on the above first sub-quantum circuit *Oracle* $O_{A1}$, the above second sub-quantum circuit *Oracle* $O_{A2}$ and the above third sub-quantum circuit *Oracle* $O_{A3}$ is also only a possible way, which will not be repeated here.

In a possible implementation, solving, for all grid cells, the linear system equations of the grid cells based on the third quantum circuit, to obtain the fluid states represented by the state parameters of the linear system equations of the above grid cells as the target states of the above grid cells when the fluid states of the above grid cells tend to be stable, including:

Step 1, for all grid cells, based on the above linear system equations represented by the above third quantum circuit, iterating the linear system equations starting from the initial values of the state parameters of the above grid cells until $b^n$ tends to 0, to obtain the $\Delta U^n$ at that time.

Step 2, updating $U^n$ stored in the quantum random access memory according to the acquired $\Delta U^n$ to obtain $U^{n+1}$ as the target states of the above grid cells.

After being linearized, the problem is transformed into solving a linear equation. The goal of this process is to output a target state:

$$|\tilde{x}\rangle := \frac{\Sigma_i \tilde{x}_i|i\rangle}{\|\Sigma_i \tilde{x}_i|i\rangle\|} \tag{15}$$

In this way, $\|\tilde{x}\rangle - |x\rangle\| \le \epsilon$, $|\tilde{x}\rangle$ is the calculated target state, $|x\rangle$ is the true value of the target state, and the amplitude of $|x\rangle$ satisfies $\vec{x} = A^{-1}\vec{b}$, where $\epsilon$ is the preset accuracy.

The quantum linear solver using Chebyshev method by Andrew Childs can be used here as an accelerator for the calculation, and the overall quantum circuit of the quantum linear solver can be shown in Fig. 10. Where $t = O(\log(j_0))$ is the number of quantum bits of the control bit $\frac{1}{\sqrt{\alpha}}\Sigma_i \sqrt{\alpha_i}|i\rangle$ and $\alpha$ is the normalization constant of $\Sigma_i \sqrt{\alpha_i}|i\rangle$. The number of quantum bits in total is $2(m + 1) + t + C_A q_f$. $\Delta \vec{U}^n$ is obtained by a quantum linear solver.

$\Delta \vec{U}^n$ is converted into a numerical form: $d_{\Delta U}^n = \Sigma_i |i\rangle|\Delta U_i^n\rangle$.

The following states are generated according to $M_U$: $\Sigma_i |i\rangle|\Delta U_i^n\rangle|U_i^n\rangle$, wherein $M_U$ is the fluid states of all grid cells stored in the quantum random memory.

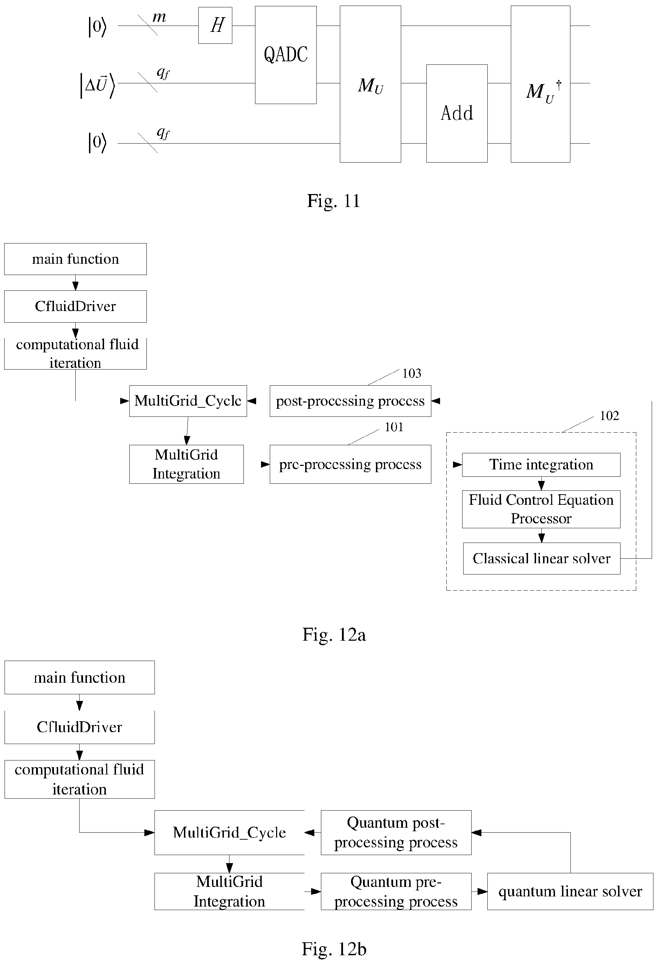

Then the quantum adder is executed on $|\Delta U_i^n\rangle$ and $|U_i^n\rangle$, to obtain: $\Sigma_i |i\rangle|\Delta U_i^{n+1}\rangle|U_i^n\rangle$. $\Sigma_i |i\rangle|\Delta U_i^{n+1}\rangle|U_i^n\rangle$. $M_U^\dagger$ is configured to disentangle the $|U_i^n\rangle$ to obtain $\Sigma_i |i\rangle|\Delta U_i^{n+1}\rangle|0\rangle$, the quantum circuit of which can be shown in Fig. 11.

Thereby $d_U^{n+1}$ is obtained and $M_U$ is updated by using $d_U^{n+1}$. In this process, $m + 2q_f$ quantum bits are needed. $M_U$ is used twice, once by the QADC and once by the quantum adder.

The evolved state obtained from quantum random access memory is the digital encoded state $|\vec{U}\rangle$, that is, the target state of the grid cell.

In a possible implementation, the above $\Delta U^n$ is data in an analog encoded state with information encoded on the amplitude of the quantum state; updating $U^n$ stored in the quantum random access memory according to the acquired $\Delta U^n$ to obtain $U^{n+1}$ as the target states of the above grid cells, specifically comprises:

Step 1, constructing a first data conversion quantum circuit *Oracle* $O_{convert1}$, wherein *Oracle* $O_{convert1}$ is configured to implement:

$$\Delta U^n |i\rangle |0\rangle \rightarrow |i\rangle |\Delta U^n\rangle.$$

Step 2, extracting $U^n$ from the above quantum random access memory.

Step 3, constructing a quantum adder circuit *Oracle* $O_{add}$, wherein *Oracle* $O_{add}$ is configured to implement:

$$|i\rangle |U^n\rangle |\Delta U\rangle \rightarrow |i\rangle |U^n\rangle |U^{n+1}\rangle.$$

Step 4, constructing a second data conversion quantum circuit *Oracle* $O_{convert2}$, wherein *Oracle* $O_{convert2}$ is configured to implement:

$$|i\rangle |U^n\rangle |U^{n+1}\rangle \rightarrow |i\rangle |0\rangle |U^{n+1}\rangle.$$

Step 5, obtaining $|i\rangle |0\rangle |U^{n+1}\rangle$ as the target values of the state parameters included in the above linear system equations, wherein $|i\rangle |0\rangle |U^{n+1}\rangle$ is encoded through eigenstates of the quantum states and encoded by the quantum circuits of the above first data conversion quantum circuit *Oracle* $O_{convert1}$, the above quantum random access memory, the above quantum adder circuit Oracle $O_{add}$ and the above second data conversion quantum circuit *Oracle* $O_{convert2}$ set in sequence.

Step 6, obtaining the target states of the above grid cells according to the above target values of the state parameters.

It should be noted that, Similar to the above discussion that it is only a possible way to construct *Oracle* $O_b$ with the help of the above first sub-quantum circuit *Oracle* $O_{b1}$, the above second sub-quantum circuit *Oracle* $O_{b2}$, the above third sub-quantum circuit *Oracle* $O_{b3}$ and the above fourth sub-quantum circuit *Oracle* $O_{b4}$, the process of obtaining quantum circuit with the help of the above first data conversion quantum circuit *Oracle* $O_{convert1}$, the above quantum random access memory, the above quantum adder circuit Oracle $O_{add}$ and the above second data conversion quantum circuit *Oracle* $O_{convert2}$ is also only a possible way, which will not be repeated here. In a possible implementation, obtaining the target states of the above grid cells according to the above target values of the state parameters, specifically includes:
Step a, constructing a third data conversion quantum circuit *Oracle* $O_{convert3}$, wherein *Oracle* $O_{convert3}$ is configured to implement $|i\rangle |0\rangle |U^{n+1}\rangle \rightarrow U^{n+1} |i\rangle$.
It should be noted that, *Oracle* $O_{convert3}$ is configured to implement the transformation from the digital encoded state to the analog encoded state, but the transformed quantum state is not unique. Exemplary, *Oracle* $O_{convert3}$ is configured to implement: $|i\rangle |1\rangle |U^{n+1}\rangle \rightarrow U^{n+1} |i\rangle |1\rangle$, at this time, the quantum circuit correspondingly implementing *Oracle* $O_{convert3}$ will require one more bit of auxiliary quantum bits to encode the 11) state, which does not satisfy the need of simplifying quantum circuit settings as much as possible.
Step b, obtaining the target state of each grid cell by converting the above target values of the state parameters into $U^{n+1}$ encoded by amplitudes of the quantum states using the above third data conversion quantum circuit *Orracle* $O_{convert3}$.
Linear system $A^n \Delta U^n = b^n$ can be solved by quantum algorithms. However, the output results are related states, not in the vector form of real solutions. Unlike vector $\Delta \vec{U}$, quantum state $|\Delta U\rangle$ has been normalized:

$$|\Delta U\rangle = \frac{A^{-1} |b\rangle}{\|A^{-1} |b\rangle\|} = c \sum_{i=1}^{N} \Delta u_i |i\rangle. \qquad (16)$$

There are different normalization constants for different A and b; usually, the constant $c^n$ of the $n^{th}$ iteration is different from the constant $c^{n+1}$ of the $(n+1)^{th}$ iteration, $U_{i,j,k}^{n+1}$ is equal to $U_{i,j,k}^n + \Delta U_{i,j,k}^n = U_{i,j,k}^1 + \sum_{l=1}^{n} \Delta U_{i,j,k}^l$, that is, it is necessary to perform the operation $\Delta \vec{U}^i + \Delta \vec{U}^j$. Further, there is still a need to implement $|\Delta U^i\rangle$ plus $|\Delta U^j\rangle$. Assuming that there is a sufficiently large constant L, a new state $|\Delta U'\rangle$ is constructed:

$$|\Delta U'\rangle = \sum_{i=1}^{N+1} \Delta u_i' |i\rangle \tag{17}$$

where,

$$\begin{cases} \Delta u_i' = \frac{\Delta u_i}{L}, & 1 \le i \le N \\ \Delta u_i' = \sqrt{1 - \sum_{j=1}^{N} \Delta u_j'}, & i = N+1 \end{cases} \tag{18}$$

Then a new set of equations is obtained:

$$\begin{cases} \sum_{j=1}^{N} A_{ij} \Delta u_j' = \frac{b_i}{L} & s.t. \ 1 \le i \le N \\ \sum_{i=1}^{N+1} \Delta u_i'^2 = 1 \end{cases} \tag{19}$$

When $\Delta t$ is sufficiently small, the second equation in equation (19) is linearized, and $\Delta u_i'^2$ is replaced with $\Delta u_i'^{n-1} \Delta u_i'^n$, thereby obtaining a new linear system A'$\Delta \vec{U}'$ = $\vec{b}'$, where

$$A' = \begin{bmatrix} A & 0 \\ \Delta u_1'^{n-1} \cdots \Delta u_N'^{n-1} & \Delta u_{N+1}'^{n-1} \end{bmatrix}, \vec{b} = \begin{bmatrix} b_1/L \\ \vdots \\ b_N/L \\ 1 \end{bmatrix} \tag{20}$$

For the state $|\Delta U'\rangle$, the normalization constant is always 1. Then, the mathematical operation may be freely completed (use the first N parts of $|\Delta U'\rangle$). When N is large enough, A' is also a sparse matrix, so it can be successfully constructed.

Optionally, the computational fluid dynamics simulation method based on a quantum algorithm in the embodiment of the present application may be applied to SU2, and some modules are replaced by quantum subroutines to seek acceleration through quantum in the execution process. The module replaced in SU2 is the data structure and method used in CfluidIteration class. In data structures, they are replaced by quantum memories or sets of quantum states, which include information about all vectors involved in grid settings and linear equations. For time integration, the linear solver is replaced by the quantum solver. In the pre-processing and post-processing stages, they are completely replaced by quantum algorithm modules, forming the Oracle necessary for quantum linear solvers. In addition, the problem model, grid setting and finite volume method, including the iterative process of time integration, are not changed.

The time complexity of the quantum algorithm is proportional to logN, where N represents the number of grids or cells in the grids. The number of quantum bits is also proportional to logN. In addition, the number of grids, the complexity and the number of quantum bits are all affected by the precision $\varepsilon$. The number of conditions $\kappa$ and sparseness s will also affect the time complexity. Optional, since the precision $\varepsilon$, the number of conditions $\kappa$ and sparseness s have little change, they can be regarded as constant in the calculation.

SU2 is an open source fluid dynamics solution. In the embodiment of the present application, quantum subprocesses are used to replace some modules in classical solvers to form a quantum-classical hybrid model. Finally, acceleration through quantum is demonstrated, where the classical model is shown in Fig. 12a and the quantum-classical hybrid model is for example shown in Fig. 12b.

For SU2_CFD module, the program starts with the main function (main) that reads the configuration file. Then, the whole calculation process is controlled by the instance of computational CfluidDriver, that is, the computational fluid iteration is performed. Time integration is performed in a for loop controlled by CfluidIteration. In each iteration step, the MultiGrid_Cycle method and the preprocessing method are called. The MultiGrid_Cycle contains MultiGrid algorithm for calculating FVM problems. Preprocessing connects the result of the previous iteration with the input of the next iteration. In MultiGrid_Cycle, the preprocessing subprocess reads the data of the grid and generates Jacobi matrix, then sends it to CeulerSolver (Fluid Control Equation Processor) and solves the linear equation by the classical linear solver.

The preprocessing module of CmultiGridIntegration includes the linear problems generated by preprocessing. This part is replaced by a corresponding quantum algorithm, and Oracle containing grid information data is called. Similar to the classical process, the final goal is to generate the quantum data needed for the next step: a quantum linear solver.

The module MultiGrid_Cycle calls the TimeIntegration module in CMultiGridIntegration, and it is replaced by a quantum linear solver, which performs tasks much faster than the classical solver.

Pre-processing in CFluidIteration processes the results after MultiGrid_Cycle, then generates data for the next iteration and displays the results. This module is replaced by one quantum post-process, the purpose of which is to add changes to the vector and prepare for the next iteration.

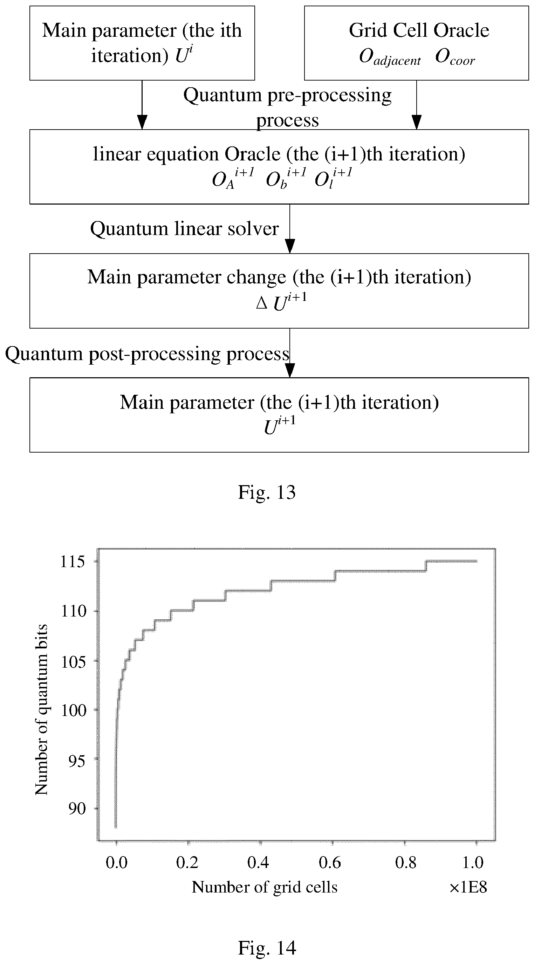

The quantum computing process can be shown in Fig. 13, where the part represented by symbol 101 in Fig. 12a is replaced by Quantum Preprocessing, the part represented by symbol 102 is replaced by Quantum linear solver, and the part represented by symbol 103 is replaced by Quantum PostProcessinig. The quantum process in each iteration step will perform a time integration $\Delta t$, input $\vec{U}^i$ and output $\vec{U}^{i+1}$. The relationships are as following:

$$A^{i+1} = A(\vec{U}^i, \widehat{M})$$

$$b^{i+1} = b(\vec{U}^i, \widehat{M}) \; .$$

Therefore, the quantum Oracles required by the quantum linear solver can be obtained. Here, in the $(i + 1)^{th}$ iteration, $A^{i+1}$ represents the coefficient matrix, $b^{i+1}$ represents the residual quantity, and $\overline{\overline{M}}$ represents the quantum Oracles of the coordinate information of grid cells. Then the following equation is solved by using a quantum computer:

$$A^{i+1} \Delta \vec{U}^{i+1} = \vec{b}^{i+1} .$$

Then, by adding the variation in the last step $\vec{U}^i$, this iterative step is over:

$$\vec{U}^{i+1} = \vec{U}^i + \Delta \vec{U}^i \; .$$

For the specific implementation process thereof, please refer to the related contents in the above embodiments. QRAM is a necessary condition for demonstrating acceleration through quantum in the model. QRAM is used in three processes: first, storing the information about grid cells, second, storing interval results of solvers, and third, it helps to recover from probability errors in performing non-unitary transformations. In the whole process of the algorithm, for quantum bits, queries and the complexity of quantum logic gates, the number of quantum bits required is:

$$\mathcal{O}(\text{qum}) = \mathcal{O}\left(2\log(4N) + \log\left(d\kappa \log\left(\frac{d\kappa}{\epsilon}\right)\right)\right) .$$

The relationship between the number of grid cells and the number of quantum bits is shown in Fig. 14. The complexity of QRAM and Oracle query is:

$$\mathcal{O}(\text{query}) = \mathcal{O}\left(d\kappa^2 \log^2\left(\frac{d\kappa}{\epsilon}\right)\right) .$$

The complexity of quantum logic gates is:

$$\mathcal{O}\left(d\kappa^2 \log^2\left(\frac{d\kappa}{\epsilon}\right) \times \text{poly}\left(\log\left(\frac{4N}{\epsilon}\right)\right)\right)$$

.

Combining SU2 with quantum programming framework, a quantum-classical hybrid solution program for solving CFD problems is compiled. QPanda quantum programming framework may be used, and QPanda and its OriginIR (Quantum Intermediate Representation) support the definition and simulation of any quantum Qracle.

The quantum linear solver part of the present application is implemented by programming, which adopts the generated linear equation, takes SU2 as input, and outputs the quantum circuit encoding equation. This program combines the SU2 module with the quantum programming framework QPanda. Quantum Oracles are used for processing, and QPanda supports the definition and simulation of quantum Oracles. Quantum Oracle is a black box that represents the transformation of a quantum state. A typical example of quantum Oracles is a quantum function: $O|x\rangle|0\rangle = |x\rangle|f(x)\rangle$, the calculation of f(x) uses the first quantum register as input and the second quantum register as output. In another example, QRAM may be regarded as an Oracle. Many quantum algorithms use Oracle, but they don't care about the implementation of Oracle-it can be decomposed into quantum gates or implemented as QRAM. In QPanda, it can be defined by using the "Oracle" function. Oracle is considered to have a name provided by the user.

Grid generation module can be integrated into a quantum computer in addition to accelerate the time integration process. In the above algorithm, the grid information is regarded as Oracle. A direct method is to pre-generate grid files and encode classical data into quantum computers. Instead of reading the pre-generated grid files, quantum algorithms can also be used instead of grid generation programs. The solver needs an effective quantum representation of matrix A and constant $\vec{b}$. In this problem, the system of partial differential equations need to be linearized to obtain the expressions of A and $\vec{b}$.

In order to improve the acceleration effect in the embodiment of the present application, the quantum computers need to meet the following requirements: fault tolerance, the method of the embodiment of the present application speeds up the calculation of each iteration step. However, with the increase of the number of grids, the number of iterations will greatly increase. In the process, quantum measurement is not performed to extract the results of each step. The quantum features (entanglement and superposition) are retained in the whole calculation process. This feature of this method means that the storage of quantum states is not affected by decoherence and noise, and quantum computers with fault tolerance can increase the accuracy of calculation results.

The quantum-classical hybrid algorithm faces the problem of data conversion between classical and quantum. The question is what is the time complexity of performing this conversion between $\Sigma|addr\rangle|data\rangle$ and classic memory. A simple method from quantum to classical is repeated measurement, or "quantum chromatography", which is often mentioned. Generally, the way from classical to quantum is to encode the state preparation stage in the quantum circuit through a set of controlled rotation operations. These methods are simple, but they will take time of $O(2^n)$. If quantum classical transformation cannot be effectively realized, many quantum algorithms will never achieve sublinear time complexity, because input and output will consume at least linear time. To solve this problem, quantum random access memory is needed. QRAM is a structure that can effectively store and load quantum information. QRAM operates addresses in superposition. It enables quantum data in digital forms to be loaded and stored in parallel with time complexity O(logN). QRAM is a quantum simulation of classical random access memory. When the addresses are in the superposition state, QRAM enables users to effectively acquire the data in QRAM.

QRAM is configured to implement.: $\Sigma_i|i\rangle|0\rangle = \Sigma_i|i\rangle|U_i\rangle$
where, $U_i$ representes the classical data encoded in the quantum state of the $i^{th}$ grid cell.

QRAM model can be realized by using a set of optical devices, which requires O(logN) operation (N representes the length of memory). QRAM model is also realized by decomposing quantum circuits.

In the embodiment of the present application, the quantum module constructed by the hybrid quantum-classical method replaces some modules in an SU2 CFD solver, which can realize the simulation of fluid movement by computational fluid dynamics. The original classical solver used FVM and iterative time integration to obtain the solution of fluid equation. Through the multi-grid method, the classical solver has a complexity of O(n) between each iteration step; here, n represents the number of grids. In this embodiment of the present application, the quantum linear solver is configured to accelerate the solution of the linear equation system, instead of the core process in the CFluidIteration processes. One is MultiGrid_Cycle, which includes preprocessing and equation solving, which has been completely replaced by quantum processes. The other is preprocessing, which links data between two iterative steps and is also replaced by quantum process. Classical data is naturally replaced by quantum data. The input grid information should be put into the QRAM which is often used in the preprocessor. Most of the internal data in the calculation process is no longer needed since they are saved in quantum registers. The configuration data of the whole problem is considered as a constant and used to directly generate quantum programs. The time complexity in the scheme of the embodiment of the present application is O(*log(N)*), N is the number of grids, and the calculation speed is much faster than the classical logarithm.

In the embodiment of the present application, an exponential acceleration is achieved through quantum for the problem without changing the problem model. Secondly, the SU2 program is fully demonstrated, and the appropriate replacement that must be made is found. Then, our algorithm is implemented with the help of QPanda quantum programming framework, and finally the numerical results are obtained. And the quantum-classical interface problem for data conversion is not ignored.

The quantum circuit module used in the quantum circuit construction in the embodiment of the present application is described below.

1. Firstly, QDAC (Quantum Digital-to-Analog Converter) and QADC (Quantum Analog-to-Digital Converter) are introduced.

The purpose of the QDAC is to change the quantum state encoded by a number between 0 and 1 to the amplitude corresponding to the quantum state. Therefore, the QDAC operation is defined by:

$$\frac{1}{\sqrt{N}} \sum_{j=1}^{N} |j\rangle |d_j\rangle \rightarrow C \sum_{j=1}^{N} d_j |j\rangle$$

.

The main idea of the QDAC algorithm is to transform coefficients in front of each ground state by rotating the auxiliary bits, which is explained in three aspects below.

First, the possibility of success is explained. QDAC algorithm has only a certain probability of success and a certain probability of failure of the operation. If it fails, please run the algorithm from the beginning. After calculation, the probability of one-time success is $\sum_{j=1}^{N} d_j^2 / N$.

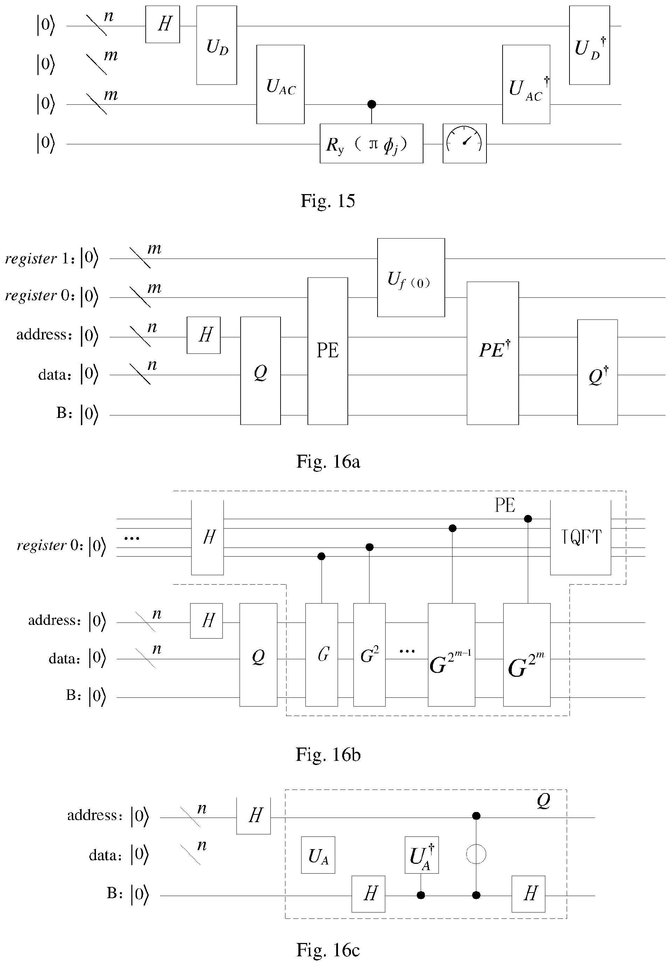

Secondly, the quantum circuit of the QDAC algorithm is shown in Fig. 15. If it is $|0\rangle$ state during measurement, continue; If it is $|1\rangle$ state, do it again from the beginning. n represents the number of quantum bits required to encode the data, and m represents the number of bits of required precision, where only the high bits need to be calculated. The $U_D$ gate is represented as: $U_D(\{dj\})|j\rangle|0\rangle = |j\rangle|d_j\rangle$. $U_{AC}$ Gate represents arccos function, and controlled $R_y$ gate represents the controlled rotation of one bit. If n H gates are not considered, a total of O(m) gates are required.

Then, the normalization problem is explained. The final coefficient needs to be normalized. After calculation, the normalization coefficient C is $\sqrt{1/\left(\sum_{j=1}^{N} d_j^2\right)}$.

The QADC algorithm includes absolute QADC, real QADC and imaginary QADC. The main ideas of these algorithms involve Hadamard test and phase estimation. The real QADC is mainly used in the present application. An m-bit real QADC operation is defined as: $O_{rAD} : \sum_{k=1}^{N} c_k |k\rangle |0\rangle^{\otimes m} \rightarrow \frac{1}{\sqrt{N}} \sum_{k=1}^{N} |k\rangle |\tilde{x}_k\rangle$.

In which, $\tilde{x}_k$ represents the m-bit string $\tilde{x}_k^{(1)} \dots \tilde{x}_k^{(m)}$ such that the $\sum_{l=1}^{m} \tilde{x}_k^{(l)} 2^{-l}$ is closest to the real portion of $c_k$. The quantum circuit of real QADC algorithm is shown in Fig. 16a. The quantum circuit for phase estimation is shown in the dashed box of Fig. 16b. The quantum circuit Q part of the real QADC is shown in the dotted box of Fig. 16c. m and n respectively represent the number of bits for the required precision and the number of bits required for encoding data. An analog encoding transformation $U_A(\{c_j\})$ is defined as: $U_A(\{c_j\})|0\rangle = \sum_j c_j|j\rangle$, here $\{c_j\}_{j=1}^{N}$ is classical data, and it satisfies the normalization condition $\sum_{j=1}^{N} |c_j|^2 = 1$.

Gate G is given by the following formula: G = $QS_0Q^\dagger Z_B$, where Q is the gate shown in Fig. 16c, $S_0$ = I - $2(|0\rangle\langle0|)_{data,B}$ is a conditional phase flip gate, and $Z_B$ is a Pauli Z gate only acting on the quantum bit B. PE represents a phase estimation, IQFT refers to inverse quantum Fourier transform.

After the phase estimation, the phase $\theta_k$ of Q can be encoded on register0 quantum bits, and then the quantum arithmetic operation $U_{f(\theta)}$ is configured to calculate $x_k = f(\theta_k) = 2\sin^2\pi\theta_k$ - 1. Finally, the uncalculated data, B, register0 quantum bits, and digital encoded state $\frac{1}{\sqrt{N}} \sum_{k=0}^{N} |k\rangle_{ad} |\tilde{x}_k\rangle_{reg1} |0\rangle_{reg0,dataB,B}$ are obtained. In the real QADC quantum circuit, 2(m + n) + 1 quantum bits are needed. Since the gates $S_0$ can be divided into $O\left[\left(\log_2^N\right)^2\right] (N = 2^n)$

single gates and double gates. Therefore, the number of single and double quantum bit gates is $O\left[(\log_2^N)^2/\varepsilon\right]$, $O(1/\varepsilon)$ controlled $U_A$ gates are used.

2. Realize matrix inversion by operating linear combination.

Any simple function can be linearly approximated as a linear combination of other functions, and the inverse function of the matrix can be approximated by Chebyshev polynomials, specifically as follows:

$$K|0^r\rangle|b\rangle = \frac{1}{\alpha}|0^r\rangle F|b\rangle + |\Xi^{\perp}\rangle$$

$$K := V^{\dagger}UV, U := \sum_i |i\rangle\langle i| \otimes U_i, V|0^m\rangle := \frac{1}{\sqrt{\alpha}}\sum_i \sqrt{\alpha_i}|i\rangle$$, $F = \sum_i \alpha_i G_i$, $\alpha := \sum_i \alpha_i$, $r = m + t$ and

$(|0^r\rangle\langle 0^r| \otimes \mathbb{I})|\Xi_i^{\perp}\rangle$.

An inverse matrix function f(x) = 1/x is required in the present application, which satisfies $O(\|A^{-1} - F\|) = \varepsilon$. The linear combination is:

$$g(x) := 4\sum_{j=0}^{j_0}(-1)^j \frac{\sum_{i=j+1}^{b}\binom{2b}{b+j}}{2^{2b}}\mathcal{T}_{2j+1}(x)$$

Here, $j_0 = \sqrt{b\log(4b/\epsilon)}, b = \kappa^2\log(\kappa/\epsilon)$, g(x) is 2ε.

$D_\kappa := (-1,-1/\kappa)U(1/\kappa,1)$. $\mathcal{T}_{2j+1}(x)$ is the first class of Chebyshev polynomials.

Quantum walk: in order to implement the Chebyshev polynomial, it needs to be carried out in the framework of quantum walk.

Because the quantum walk is performed on some states $|\varphi_j\rangle$ in space $\mathbb{C}^{2N} \otimes \mathbb{C}^{2N}$, defining a mapping T := $\sum_{j\in[N]} |\varphi_j\rangle\langle j|$, from $\mathbb{C}^N$ to $\mathbb{C}^{2N} \otimes \mathbb{C}^{2N}$.

$$|\psi_j\rangle := |j\rangle \otimes \frac{1}{\sqrt{d}}\sum_{k\in[N]:A_{jk}\neq 0}\left(\sqrt{A_{jk}^*}\left|k\rangle + \sqrt{1 - |A_{jk}|}\right|k + N\rangle\right)$$

And a walk operator is as follows:

$$W = S(2TT^{\dagger} - 1)$$

The operator S performs the flip operation on the product state in $|\varphi_j\rangle$, and thus:

$$T^{\dagger}W^nT|b\rangle = |0^m\rangle\mathcal{T}_n(H)|b\rangle + |\perp_b\rangle$$

$\mathcal{T}_n(\lambda)$ is the first class of Chebyshev polynomials.

Implementation of the Quantum circuit: two Oracles are used to extract the information of matrix A: $O_1$ and $O_A$, written as:

$$O_1|j,l\rangle = |j, f(j,l)\rangle, O_A|j,k,z\rangle = |j,k,z \oplus A_{jk}\rangle$$

The first goal is to decode the state $\frac{1}{\sqrt{\alpha}} \sum_{i}^{j_0} \sqrt{\alpha_i} |i\rangle$, which can prepare the quantum circuit with a length of $O(j_0)$.

Next, a T operator is constructed, which can be synthesized as follows. For the vector $|j\rangle$, the whole circuit needs $\log_2^{2N}$ quantum bits, similarly, $\log_2^{2N}$ indicates its product state and a bunch of auxiliary quantum bits are used for rotation control.

$$|0^t\rangle \overset{H}{\to} \frac{1}{\sqrt{d}} \sum_{l=0}^{d-1} |l\rangle$$

$$|j\rangle \frac{1}{\sqrt{d}} \sum_{l=0}^{d-1} |l\rangle \overset{O_F}{\to} |j\rangle \frac{1}{\sqrt{d}} \sum_{l \in F_j} |l\rangle$$

$$|j\rangle \frac{1}{\sqrt{d}} \sum_{l \in F_j} |l\rangle |0\rangle \overset{O_H}{\to} |j\rangle \frac{1}{\sqrt{d}} \sum_{l \in F_j} |l\rangle |A_{jl}\rangle .$$

Consider $A_{jl}$ as a series of control bits, define a control rotation operator:

$$M := \begin{pmatrix} \sqrt{H_{jl}^*/X} & -\sqrt{(1-|H_{jl}|)/X} \\ \sqrt{(1-|H_{jl}|)/X} & \sqrt{H_{jl}^*/X} \end{pmatrix}$$

$$|H_{jl}\rangle|0\rangle \overset{M}{\to} |H_{jl}\rangle \sqrt{H_{jl}^*/X}|0\rangle + \sqrt{(1-|H_{jl}|)/X}|1\rangle .$$

Operator M is synthesized by an Oracle $O_{amp}$ as: $|l\rangle|z\rangle \overset{O_{amp}}{\longrightarrow} |l\rangle|z \otimes \alpha_l^{(n)}\rangle$

The purpose is to prepare an approximation to the target state.

$$|target\rangle := \frac{1}{\|\alpha\|_2} \sum_{l=0}^{n} \alpha_l |l\rangle$$

The key contribution is M as the control rotation operator.

$$|\alpha\rangle|0\rangle := |\alpha\rangle(\sin(\theta)|0\rangle + \cos(\theta)|1\rangle)$$

Use $O_H$ again to change $|H_{jl}\rangle$ back to $|0\rangle$.

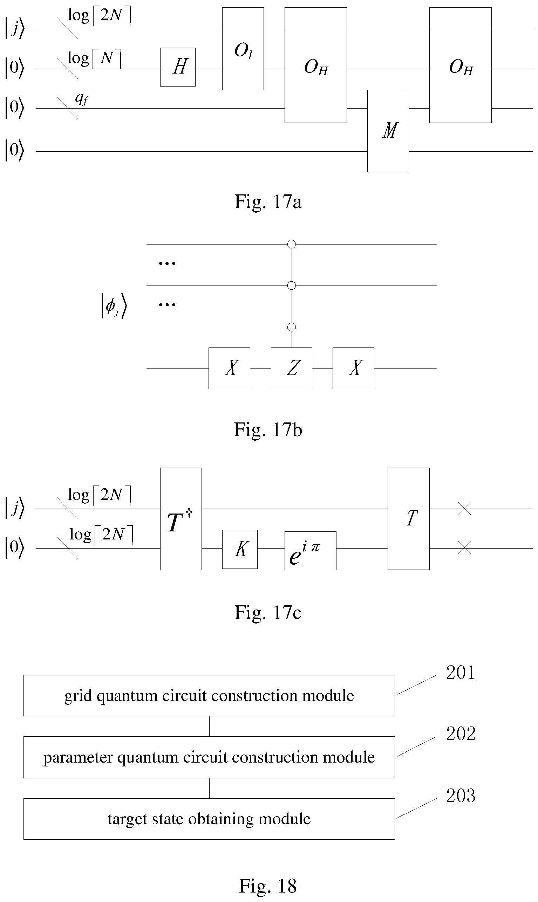

Next, for example, as shown in figs. 17a-17c, the quantum circuit of W will be described. Since $W = S(2TT^\dagger - I_{4N2})$, S can be constructed by a group of exchange operations, and what remains is $TT^\dagger - I_{4N2}$.

$$|\psi_j\rangle := |j\rangle \otimes \frac{1}{\sqrt{d}} \sum_{k \in [N]: A_{jk} \neq 0} \left( \sqrt{A_{jk}^*} |k\rangle + \sqrt{1 - |A_{jk}|} |k+N\rangle \right) = |j\rangle \otimes |\phi_j\rangle .$$

Therefore $TT^\dagger = |j\rangle\langle j| \oplus |\phi_j\rangle\langle\phi_j|$. Operator T is a unitary operator in a quantum circuit, which changes $|j\rangle|0\rangle$ to $|\Psi_j\rangle$. It is different from $T := \sum_{j \in N} |\Psi_j\rangle\langle j|$ with a dimension of $4N^2 \times 2N$. For distinguishing, $T_{qc}$ is configured to define this quantum circuit:

$$T_{qc}\left(\Sigma_j |j\rangle\langle j| \otimes (2|0\rangle\langle 0| - I_{2N})\right)T_{qc}^\dagger = \Sigma_j |j\rangle\langle j| \otimes (2|\phi_j\rangle\langle\phi_j| - I_{2N}) = 2TT^\dagger - I_{4N^2}$$

$$K = 2|0\rangle\langle 0| - I_{2N} = \mathrm{diag}(1, -1, -1, \ldots -1) = -\mathrm{diag}(-1, 1, 1, \ldots, 1)$$

In quantum circuit, H represents H-gate, $O_H$ and M represents Oracles with different functions, $\dagger$ represents transposed conjugation, and T represents the whole functional module T of H-gate and Oracle combination, the function of T module is to transform $|j\rangle$ into $|\mathit{\Psi}_j\rangle$. In addition, the matrix obtained for the input of the T module is an N-order matrix, with N in the $\lceil \log_2 N \rceil$ above $|j\rangle$ representing the number of matrix rows, N in the lower $\lceil \log_2 N \rceil$ representing the number of matrix columns, and the rest expressions are the same as above. The constructed T module can be equivalent to a quantum logic gate in the quantum circuit, and its matrix form is: $\Sigma_{j\in[N]} |\mathit{\Psi}_j\rangle\langle j|$, where $\langle j|$ is the left vector of quantum state.

Specifically, using the H-gate, the superposition state is constructed: $|l_1\rangle = |j\rangle\frac{1}{\sqrt{d}}\Sigma_{l=0}^{d-1}|l\rangle$; Where j is the target value, representing the $j^{th}$ row of the matrix; $\otimes$ represents a tensor product or multiplication; d is the number of non-zero elements in the $j^{th}$ row in total; l is the sequence number of a non-zero element in all the non-zero elements in the $j^{th}$ row, indicating the $l^{th}$ non-zero element, and the quantum bit corresponding to $|l\rangle$ is the first quantum bit.

Implementation of $O_H$ transformation: $O_F|l_2\rangle|0\rangle = |j\rangle\frac{1}{\sqrt{d}}\Sigma_{l'\in F_j}|l'\rangle|H_{jl'}\rangle$; where, $H_{jl'}$ is the non-zero element value in the $j^{th}$ row and the $l^{th}$ column of the matrix, and the quantum bit corresponding to $|H_{jl'}\rangle$ is the second quantum bit. It should be noted that if $H_{jl'}$ is a complex, the real part and the imaginary part can be encoded on the second bit, that is $|H_{jl'}\rangle = |\mathrm{real}\rangle|\mathrm{imag}\rangle$, real represents the real part and image represents the imaginary part; If $H_{jl'}$ is written in Euler form $re^{i\theta}$, the information of r and $\theta$ can be encoded on the second bit, that is $|H_{jl'}\rangle = |r\rangle|\theta\rangle$.

Implementation of M transformation:

$$M|H_{jl'}\rangle|0\rangle = |H_{jl'}\rangle\left(\sqrt{\frac{H_{jl'}^*}{H_{\max}}}\,|0\rangle + \sqrt{1 - \left|\frac{H_{jl'}}{H_{\max}}\right|}\,|1\rangle\right);$$

finally, the transposition conjugation operation is performed by calling $O_H$ again, the quantum bit of encoded $H_{jl'}$ is recovered, and then $|\mathit{\Psi}_j\rangle$ is outputted. $H_{jl'}^*$ is the conjugate of the non-zero element values in the $j^{th}$ row and the $l^{th}$ column of matrix H, and $H_{\max}$ is the element value with the largest absolute value in matrix H.

An embodiment of the present application also provides a computational fluid dynamics simulation apparatus based on a quantum algorithm, as shown in Fig. 18, which includes:

a grid quantum circuit construction module 201 configured for, in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state; a parameter quantum circuit construction module 202 configured for constructing a third quantum circuit representing parameters of a linear system equation that represents a change of a fluid state of the grid cell based on the first quantum circuit, the second quantum circuit and the quantum random access memory; a target state obtaining module 203 configured for solving, for all grid cells, the linear system equations of the grid cells based on the third quantum circuit, to obtain fluid states represented by the state parameters of the linear system equations of the grid cells as target states of the grid cells when the fluid states of the grid cells tend to be stable.

In a possible implementation, the first quantum circuit comprises a first Oracle and a second Oracle; the first Oracle is configured to extract the number of adjacent grids of a specified grid cell, and the second Oracle is configured to extract coordinate information of the grid cell.

In a possible implementation, the second quantum circuit comprises: a second analog state quantum circuit that extracts the state parameters of the grid cell through amplitudes of quantum states, and a second digital state quantum circuit that extracts the state parameters of the grid cell through eigenstates of quantum states.

In a possible implementation, a preset mapping relationship between addresses and data is stored in the quantum random access memory, wherein the addresses are encoded in a first superposition state, each eigenstate in the first superposition state corresponds to one piece of address information, the data is encoded in a second superposition state, and each eigenstate in the second superposition state corresponds to one piece of data information.

In a possible implementation, the linear system equation is: $A^n \Delta U^n = b^n$, wherein $\Delta U^n = U^{n+1} - U^n$; wherein, n represents a $n^{th}$ moment of recording a fluid state; $U^n$ represents fluid states of the grid cells at the $n^{th}$ moment, $U^n = \{U_i\}$, i = 0,1,2, ..., N - 1, and $U_i$ represents a fluid state of a grid cell i; $A^n$ represents a coefficient matrix at the $n^{th}$ moment, and $A^n = \{A(U^n, \hat{M})\}$, representing that $A^n$ is a function associated with $U^n, \hat{M}$, $b^n$ represents a residual quantity at the $n^{th}$ moment, and $b^n = \{b(U^n, \hat{M})\}$, representing that $b^n$ is a function associated with $U^n, \hat{M}$, N is the number of grid cells in total and $\hat{M}$ is coordinate information of the grid cells.

The parameters of the linear system equation comprise the coefficient matrix $A^n$ at a current moment and the residual quantity $b^n$ at the current moment; the third quantum circuit comprises *Oracle* $O_A$ corresponding to the coefficient matrix $A^n$ and *Oracle* $O_b$ corresponding to the residual quantity $b^n$; the Oracle $O_A$ is configured to extract an element $A_{i'j'}$ of the coefficient matrix $A^n$ at the current $n^{th}$ moment, $A^n = \{A_{ij'}\}$, i' = 4i + $i_1$; j' = 4j + $j_1$, i,j = 0,1,2, ...., N - 1; $i_1$ and $j_1$ are integers from 0 to 3; for a $j^{th}$ adjacent grid cell of the grid cell i, *Oracle* $O_A$ has an effect of $O_A|i\rangle|j\rangle = |i\rangle|j\rangle|A_{ij'}\rangle$; the *Oracle* $O_b$ is configured to extract an element $b_i$ of the residual quantity $b^n$ at the current $n^{th}$ moment, wherein, $b_i$ represents a residual quantity of the grid cell i; $b^n = \{b_i\}$, i = 0,1,2, ..., N - 1, for the grid cell i, the *Oracle* $O_b$ has an effect of $O_b|0\rangle = \Sigma_i b_i|i\rangle$.

In a possible implementation, the parameter quantum circuit construction module 202 is specifically configured for:

for the residual quantity $b_i$ corresponding to the grid cell *i* contained in $b^n$, obtaining related grid cells of the grid cell i;

obtaining coordinate information of the related grid cells as first related coordinate information $X_{related}$ based on the second Oracle;

obtaining state parameter information corresponding to the related grid cells as a first related state parameter $U_{related}$ based on the second quantum circuit and the quantum random access memory;

constructing a first sub-quantum circuit *Oracle* $O_{b1}$ for simultaneously encoding the first related coordinate information and the first related state parameter, wherein *Oracle* $O_{b1}$ is configured to implement:

$$|i\rangle|0\rangle|0\rangle \rightarrow |i\rangle|U_{related}\rangle|X_{related}\rangle;$$

obtaining $b_i(X_{related}, U_{related})$ based on $U_{related}$ and $X_{related}$;

constructing a second sub-quantum circuit *Oracle* $O_{b2}$ for encoding $b_i(X_{related}, U_{related})$, wherein *Oracle* $O_{b2}$ is configured to implement $|i\rangle|U_{related}\rangle|X_{related}\rangle|0\rangle \rightarrow| i\rangle|U_{related}\rangle|X_{related}\rangle|b_i\rangle$;

constructing a third sub-quantum circuit *Oracle* $O_{b3}$, wherein the third sub-quantum circuit *Oracle* $O_{b3}$ is a transposed conjugate quantum circuit of the first sub-quantum circuit *Oracle* $O_{b1}$, and *Oracle* $O_{b3}$ is configured to implement $|i\rangle|U_{related}\rangle|X_{related}\rangle|b_i\rangle \rightarrow| i\rangle|0\rangle|0\rangle|b_i\rangle$;

constructing a fourth sub-quantum circuit *Oracle* $O_{b4}$ for quantum state transformation, wherein *Oracle* $O_{b4}$ is configured to implement $|i\rangle|0\rangle|0\rangle|b_i\rangle \rightarrow b_i|i\rangle$;

constructing *Oracle* $O_b$ based on the first sub-quantum circuit Oracle $O_{b1}$, the second sub-quantum circuit *Oracle* $O_{b2}$, the third sub-quantum circuit *Oracle* $O_{b3}$ and the fourth sub-quantum circuit *Oracle* $O_{b4}$.

In a possible implementation, the parameter quantum circuit construction module 202 is specifically configured for:

for a coefficient matrix $A_{i'j'}$ contained in $A^n$, obtaining a grid number $g(i,j)$ of the $j^{th}$ adjacent grid cell of the grid cell i based on the first Oracle, wherein $g(i,j)$ is a function of the state parameters and the coordinate information of the grid cell;

constructing a column number $f(i,j)$ of a $j^{th}$ non-zero element in an $i^{th}$ row of $A_{i'j'}$ based on the grid number $g(i,j)$ of

$$f(i,j) = 4g\left(\left\lfloor \frac{i}{4} \right\rfloor, \left\lfloor \frac{j}{4} \right\rfloor\right) + j\%4$$

the $j^{th}$ adjacent grid cell of the grid cell i; wherein , wherein $f(i,j)$ is a function of the state parameters and the coordinate information of the grid cell, % represents a remainder operation, and $\lfloor \ \rfloor$ represents a RoundDown symbol;

obtaining $A_{ij}$ according to $f(i,j)$, wherein:

$$A_{i'j'} = A_{4i_0+i_1, 4j_0+j_1} = f_{i_0,i_1,j_0,j_1}(U_{i_0}, U_{j_0}, X_{i_0}, X_{j_0})$$

$i_0$, $j_0$, respectively represent the serial numbers of the grid cells $i$, $j$, each grid cell has four state parameters, $i_1$, $j_1$ range from 0 to 3, and respectively represent four state parameters of the grid cells $i_0$, $j_0$; $U_{i0}$ represents state parameters in the grid cell $i_0$, $U_{i0}$ represents state parameters in the grid cell $j_0$; $X_{i0}$ represents the position coordinates related to the grid cell i0, $X_{i0}$ represents the position coordinates related to the grid cell $j_0$;

for $i_0$ and $j_0$, extracting corresponding state parameters $U_{i0}$ and $U_{j0}$ thereof by using the quantum random access memory; and extracting corresponding coordinate information $X_{i0}$ and $X_{j0}$ thereof by using the second Oracle;

constructing a first sub-quantum circuit *Oracle O$_{A1}$* for simultaneously encoding the coordinate information $X_{i0}$ and $X_{j0}$ and the state parameters $U_{i0}$ and $U_{j0}$, wherein *Oracle O$_{A1}$* is configured to implement:

$$|i,j\rangle|0\rangle \rightarrow |4i_0 + i_1, 4j_0 + j_1\rangle|U_{i_0}, U_{j_0}, X_{i_0}, X_{j_0}\rangle$$

constructing a second sub-quantum circuit *Oracle O$_{A2}$* for encoding $f_{i0,i1,j0,j1}(U_{i0}, U_{j0}, X_{i0}, X_{j0})$, wherein *Oracle O$_{A2}$* is configured to implement:

$$|4i_0 + i_1, 4j_0 + j_1\rangle|U_{i_0}, U_{j_0}, X_{i_0}, X_{j_0}\rangle|0\rangle \rightarrow$$

$$|4i_0 + i_1, 4j_0 + j_1\rangle|U_{i_0}, U_{j_0}, X_{i_0}, X_{j_0}\rangle|f_{i_0,i_1,j_0,j_1}(U_{i_0}, U_{j_0}, X_{i_0}, X_{j_0})\rangle$$

constructing a third sub-quantum circuit *Oracle O$_{A3}$*, wherein the third sub-quantum circuit *Oracle O$_{A3}$* is a transposed conjugate quantum circuit of the first sub-quantum circuit *Oracle O$_{A3}$*, and Oracle O$_{A3}$ is configured to implement

$$|4i_0 + i_1, 4j_0 + j_1\rangle|U_{i_0}, U_{j_0}, X_{i_0}, X_{j_0}\rangle|f_{i_0,i_1,j_0,j_1}(U_{i_0}, U_{j_0}, X_{i_0}, X_{j_0})\rangle \rightarrow$$

$$|4i_0 + i_1, 4j_0 + j_1\rangle|0\rangle|f_{i_0,i_1,j_0,j_1}(U_{i_0}, U_{j_0}, X_{i_0}, X_{j_0})\rangle$$

constructing *Oracle O$_A$* based on the first sub-quantum circuit *Oracle O$_{A1}$*, the second sub-quantum circuit *Oracle O$_{A2}$* and the third sub-quantum circuit Oracle O$_{A3}$.

In a possible implementation, the target state obtaining module 203 includes:

an iteration calculation submodule configured for, for all the grid cells, based on the linear system equations represented by the third quantum circuit, iterating the linear system equations starting from initial values of the state parameters of the grid cells until $b^n$ tends to 0, to obtain $\Delta U^n$ at that time;

a target state calculation submodule, configured for updating $U^n$ stored in the quantum random access memory according to the acquired $\Delta U^n$ to obtain $U^{n+1}$ as the target states of the grid cells.

In a possible implementation, the $\Delta U^n$ is data in an analog encoded state with information encoded on an amplitude of a quantum state; the target state calculation submodule comprises:

a first construction unit for constructing a first data conversion quantum circuit *Oracle* $O_{convert1}$, wherein Oracle $O_{convert1}$ is configured to implement:

$$\Delta U^n |i\rangle |0\rangle \rightarrow |i\rangle |\Delta U^n\rangle,$$

a state extraction unit for extracting $U^n$ from the quantum random access memory

a second construction unit for constructing a quantum adder circuit Oracle $O_{add}$, wherein Oracle $O_{add}$ is configured to implement:

$$|i\rangle |U^n\rangle |\Delta U\rangle \rightarrow |i\rangle |U^n\rangle |U^{n+1}\rangle,$$

a third construction unit for constructing a second data conversion quantum circuit *Oracle* $O_{convert2}$, wherein *Oracle* $O_{convert2}$ is configured to implement:

$$|i\rangle |U^n\rangle |U^{n+1}\rangle \rightarrow |i\rangle |0\rangle |U^{n+1}\rangle$$

a target value determination unit for obtaining $|i\rangle |0\rangle |U^{n+1}\rangle$ as target values of the state parameters contained in the linear system equations, wherein $|i\rangle |0\rangle |U^{n+1}\rangle$ is encoded through eigenstates of the quantum states and encoded by the quantum circuits of the first data conversion quantum circuit *Oracle* $O_{convert1}$, the quantum random access memory, the quantum adder circuit Oracle $O_{add}$ and the second data conversion quantum circuit *Oracle* $O_{convert2}$ set in sequence;

a target state determination unit for obtaining target states of the grid cells according to the target values of the state parameters.

In a possible implementation, wherein the target state determining unit is specifically configured for: constructing a third data conversion quantum circuit *Oracle* $O_{convert3}$ , wherein *Oracle* $O_{convert3}$ is configured to implement $|i\rangle |0\rangle |U^{n+1}\rangle \rightarrow U^{n+1} |i\rangle$; obtaining the target state of each grid cell by converting the target values of the state parameters into $U^{n+1}$ encoded by amplitudes of the quantum states using the third data conversion quantum circuit Oracle $O_{convert3}$.

The embodiment of the present application also provides a quantum computer device, which comprises a quantum circuit, a device based on a quantum effect, and a quantum random access memory, and the quantum computer device may realize any computational fluid dynamics simulation method based on a quantum algorithm mentioned above at runtime.

The embodiment of the present application also provides a computer-readable storage medium having stored therein a computer program that, when executed by a processor, causes the processor to perform the computational fluid dynamics simulation method based on a quantum algorithm described above.

It should be noted that, in this document, the technical features of various alternative solutions may be combined to form a solution as long as they do not contradict each other, and these solutions are all within the scope of the present application. Relational terms such as first and second are only used to distinguish one entity or operation from another entity or operation, and do not necessarily require or imply any such actual relationship or sequence between these entities or operations. Moreover, the terms "include", "comprise" or any other variation thereof are intended to cover non-exclusive inclusion, so that a process, method, article or device that includes a series of elements not only includes those elements, but also includes other elements not explicitly listed, or also includes elements inherent to such process, method, article or equipment. Without further limitation, the elements defined by the statement "including one ..." do not preclude the existence of another identical elements in the process, method, article or device that includes the elements.

Each embodiment in this specification is described in a relevant manner, and the same and similar parts between each embodiment can be referred to each other, and each embodiment focuses on the difference from the other embodiments. In particular, for the embodiments of the device, quantum computer device and storage medium, the description is relatively simple since they are basically similar to the method embodiments, and the relevant parts can be found in the partial descriptions of the method embodiments.

The above is only a preferred embodiment of the present application, and is not intended to limit the scope of protection of the present application. Any modification, equivalent replacement, improvement, etc. made within the spirit and principle of the present application are included in the scope of protection of the present application.

**Claims**

1. A computational fluid dynamics simulation method based on a quantum algorithm, comprising:

   in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state;
   constructing a third quantum circuit representing parameters of a linear system equation that represents a change of a fluid state of the grid cell based on the first quantum circuit, the second quantum circuit and the quantum random access memory;
   solving, for all grid cells, the linear system equations of the grid cells based on the third quantum circuit, to obtain fluid states represented by the state parameters of the linear system equations of the grid cells as target states of the grid cells when the fluid states of the grid cells tend to be stable.

2. The method according to claim 1, wherein the first quantum circuit comprises a first Oracle and a second Oracle; the first Oracle is configured to extract the number of adjacent grids of a specified grid cell, and the second Oracle is configured to extract coordinate information of the grid cell.

3. The method according to claim 1, wherein the second quantum circuit comprises:
   a second analog state quantum circuit that extracts the state parameters of the grid cell through amplitudes of quantum states, and a second digital state quantum circuit that extracts the state parameters of the grid cell through eigenstates of quantum states.

4. The method according to claim 1, wherein a preset mapping relationship between addresses and data is stored in the quantum random access memory, wherein the addresses are encoded in a first superposition state, each eigenstate in the first superposition state corresponds to one piece of address information, the data is encoded in a second superposition state, and each eigenstate in the second superposition state corresponds to one piece of data information.

5. The method according to claim 2, wherein the linear system equation is: $A^n \Delta U^n = b^n$, wherein $\Delta U^n = U^{n+1} - U^n$;

   wherein, n represents a $n^{th}$ moment of recording a fluid state; $U^n$ represents fluid states of the grid cells at the $n^{th}$ moment, $U^n = \{U_i\}$, $i = 0,1,2, ..., N - 1$, and $U_i$ represents a fluid state of a grid cell i; $A^n$ represents a coefficient matrix at the $n^{th}$ moment, and $A^n = \{A(U^n,\hat{M})\}$, representing that $A^n$ is a function associated with $U^n$, $\hat{M}$, $b^n$ represents a residual quantity at the $n^{th}$ moment, and $b^n = \{b(U^n,\hat{M})\}$, representing that $b^n$ is a function associated with $U^n$, $\hat{M}$, N is the number of grid cells in total and $\hat{M}$ is coordinate information of the grid cells;
   the parameters of the linear system equation comprise the coefficient matrix $A^n$ at a current moment and the residual quantity $b^n$ at the current moment;
   the third quantum circuit comprises *Oracle $O_A$* corresponding to the coefficient matrix $A^n$ and *Oracle $O_b$* corresponding to the residual quantity $b^n$;
   the *Oracle $O_A$* is configured to extract an element $A_{ij'}$ of the coefficient matrix $A^n$ at the current $n^{th}$ moment, $A^n = \{A_{ij'}\}$, $i' = 4i + i_1$, $j' = 4j + i$, $j = 0,1,2, ..., N - 1$. $i_1$ and $j_1$ are integers from 0 to 3; for a $j^{th}$ adjacent grid cell of the grid cell i, *Oracle $O_A$* has an effect of $O_A|i\rangle|i\rangle = |i\rangle|i\rangle|A_{ij'}\rangle$;
   the *Oracle $O_b$* is configured to extract an element $b_i$ of the residual quantity $b^n$ at the current $n^{th}$ moment, wherein, $b_i$ represents a residual quantity of the grid cell i; $h^n = \{b_i\}$, $i = 0,1,2,...,N - 1$, for the grid cell i, the Oracle $O_b$ has an effect of $O_b |0\rangle = \Sigma_i b_i |i\rangle$.

6. The method according to claim 5, wherein constructing the third quantum circuit representing the parameters of the linear system equation that represents the change of the fluid state of the grid cell based on the first quantum circuit, the second quantum circuit and the quantum random access memory, comprises:

   for the residual quantity $b_i$ corresponding to the grid cell *i* contained in $b^n$, obtaining related grid cells of the grid cell i;

obtaining coordinate information of the related grid cells as first related coordinate information $X_{related}$ based on the second Oracle;

obtaining state parameter information corresponding to the related grid cells as a first related state parameter $U_{related}$ based on the second quantum circuit and the quantum random access memory;

constructing a first sub-quantum circuit *Oracle $O_{b1}$* for simultaneously encoding the first related coordinate information and the first related state parameter, wherein *Oracle $O_{b1}$* is configured to implement:

$$|i\rangle|0\rangle|0\rangle \to |i\rangle|U_{related}\rangle|X_{related}\rangle;$$

obtaining $b_i(X_{related}, U_{related}$ based on $U_{related}$ and $X_{related}$;

constructing a second sub-quantum circuit *Oracle $O_{b2}$* for encoding $b_i$ ($X_{related}$, $U_{related}$), wherein Oracle $O_{b2}$ is configured to implement $|i\rangle U_{related}\rangle|X_{related}\rangle|0\rangle \to|i\rangle U_{related}\rangle|X_{related}\rangle|b_i\rangle$;

constructing a third sub-quantum circuit Oracle $O_{b3}$, wherein the third sub-quantum circuit *Oracle $O_{b3}$* is a transposed conjugate quantum circuit of the first sub-quantum circuit *Oracle $O_{b1}$*, and *Oracle $Q_{b3}$* is configured to implement $|i\rangle U_{related}\rangle|X_{related}\rangle|b_i\rangle \to|i\rangle|0\rangle|0\rangle|b_i\rangle$;

constructing a fourth sub-quantum circuit *Oracle $O_{b4}$* for quantum state transformation, wherein Oracle $O_{b4}$ is configured to implement $|i\rangle|0\rangle|0\rangle|b_i\rangle \to b_i|i\rangle$;

constructing *Oracle $O_b$* based on the first sub-quantum circuit Oracle $O_{b1}$, the second sub-quantum circuit *Oracle $O_{b2}$*, the third sub-quantum circuit Oracle $O_{b3}$ and the fourth sub-quantum circuit *Oracle $O_{b4}$*.

7. The method according to claim 5 or 6, wherein constructing the third quantum circuit representing the parameters of the linear system equation that represents the change of the fluid movement state of the grid cell based on the first quantum circuit, the second quantum circuit and the quantum random access memory, comprises:

for a coefficient matrix $A_{i'j'}$ contained in $A^n$, obtaining a grid number $g(i,j)$ of the $j^{th}$ adjacent grid cell of the grid cell i based on the first Oracle, wherein $g(i,j)$ is a function of the state parameters and the coordinate information of the grid cell;

constructing a column number $f(i,j)$ of a $j^{th}$ non-zero element in an $i^{th}$ row of $A_{i'j'}$ based on the grid number $g(i,j)$ of the $j^{th}$ adjacent grid cell of the grid cell i; wherein $f(i,j)=4g\left(\left\lfloor\frac{i}{4}\right\rfloor,\left\lfloor\frac{j}{4}\right\rfloor\right)+j\%4$ ; wherein $f(i,j)$ is a function of the state parameters and the coordinate information of the grid cell, % represents a remainder operation, and $\llcorner\lrcorner$ represents a RoundDown symbol;

obtaining $A_{ij}$ according to $f(i,j)$, wherein:

$$A_{i'j'} = A_{4i_0+i_1,4j_0+j_1} = f_{i_0,i_1,j_0,j_1}(U_{i_0},U_{j_0},X_{i_0},X_{j_0});$$

$i_0, j_0$, respectively represent the serial numbers of the grid cells *i, j*, each grid cell has four state parameters, $i_1$, $j_1$ range from 0 to 3, and respectively represent four state parameters of the grid cells $i_0, j_0$; $U_{i0}$ represents state parameters in the grid cell $i_0$, $U_{j0}$ represents state parameters in the grid cell $j_0$; $X_{i0}$ represents the position coordinates related to the grid cell $i_0$, $X_{j0}$ represents the position coordinates related to the grid cell $j_0$;

for $i_0$ and $j_0$, extracting corresponding state parameters $U_{i0}$ and $U_{j0}$ thereof by using the quantum random access memory; and extracting corresponding coordinate information $X_{i0}$ and $X_{j0}$ thereof by using the second Oracle;

constructing a first sub-quantum circuit *Oracle $O_{A1}$* for simultaneously encoding the coordinate information $X_{i0}$ and $X_{j0}$ and the state parameters $U_{j0}$ and $U_{j0}$, wherein *Oracle $O_{A1}$* is configured to implement:

$$|i,j\rangle|0\rangle \to |4i_0+i_1,4j_0+j_1\rangle|U_{i_0},U_{j_0},X_{i_0},X_{j_0}\rangle,$$

constructing a second sub-quantum circuit *Oracle $O_{A2}$* for encoding $f_{i0,i1,j0,j1}(U_{i0},U_{j0},X_{i0},X_{j0})$, wherein Oracle $O_{A2}$ is configured to implement:

$$|4i_0 + i_1, 4j_0 + j_1\rangle|U_{i_0,}U_{j_0,}X_{i_0,}X_{j_0}\rangle|0\rangle \rightarrow$$

$$|4i_0 + i_1, 4j_0 + j_1\rangle|U_{i_0,}U_{j_0,}X_{i_0,}X_{j_0}\rangle|f_{i_0,i_1,j_0,j_1}(U_{i_0,}U_{j_0,}X_{i_0,}X_{j_0})\rangle;$$

constructing a third sub-quantum circuit *Oracle* $O_{A3}$, wherein the third sub-quantum circuit *Oracle* $O_{A3}$ is a transposed conjugate quantum circuit of the first sub-quantum circuit *Oracle* $O_{A3}$, and *Oracle* $O_{A3}$ is configured to implement:

$$|4i_0 + i_1, 4j_0 + j_1\rangle|U_{i_0,}U_{j_0,}X_{i_0,}X_{j_0}\rangle|f_{i_0,i_1,j_0,j_1}(U_{i_0,}U_{j_0,}X_{i_0,}X_{j_0})\rangle \rightarrow$$

$$|4i_0 + i_1, 4j_0 + j_1\rangle|0\rangle|f_{i_0,i_1,j_0,j_1}(U_{i_0,}U_{j_0,}X_{i_0,}X_{j_0})\rangle;$$

constructing Oracle $O_A$ based on the first sub-quantum circuit Oracle $O_{A1}$, the second sub-quantum circuit *Oracle* $O_{A2}$ and the third sub-quantum circuit *Oracle* $O_{A3}$.

8. The method according to claim 5, wherein, solving, for all grid cells, the linear system equations of the grid cells based on the third quantum circuit, to obtain the fluid states represented by the state parameters of the linear system equations of the grid cells as the target states of the grid cells when the fluid states of the grid cells tend to be stable, comprises:

for all the grid cells, based on the linear system equations represented by the third quantum circuit, iterating the linear system equations starting from initial values of the state parameters of the grid cells until $b^n$ tends to 0, to obtain $\Delta U^n$ at that time;
updating $U^n$ stored in the quantum random access memory according to the acquired $\Delta U^n$ to obtain $U^{n+1}$ as the target states of the grid cells.

9. The method according to claim 8, wherein the $\Delta U^n$ is data in an analog encoded state with information encoded on an amplitude of a quantum state;
updating $U^n$ stored in the quantum random access memory according to the acquired $\Delta U^n$ to obtain $U^{n+1}$ as the target states of the grid cells, specifically comprises:

constructing a first data conversion quantum circuit *Oracle* $O_{convert1}$, wherein *Oracle* $O_{convert1}$ is configured to implement:

$$\Delta U^n|i\rangle|0\rangle \rightarrow |i\rangle|\Delta U^n\rangle;$$

extracting $U^n$ from the quantum random access memory;
constructing a quantum adder circuit Oracle $O_{add}$, wherein *Oracle* $O_{add}$ is configured to implement:

$$|i\rangle|U^n\rangle|\Delta U\rangle \rightarrow |i\rangle|U^n\rangle|U^{n+1}\rangle;$$

constructing a second data conversion quantum circuit Oracle $O_{convert2}$, wherein *Oracle* $O_{convert2}$ is configured to implement:

$$|i\rangle|U^n\rangle|U^{n+1}\rangle \rightarrow |i\rangle|0\rangle|U^{n+1}\rangle;$$

obtaining $|i\rangle|0\rangle U^{n+1}\rangle$ as target values of the state parameters contained in the linear system equations, wherein $|i\rangle|0\rangle U^{n+1}\rangle$ is encoded through eigenstates of the quantum states and encoded by the quantum circuits of the first data conversion quantum circuit Oracle $O_{convert1}$, the quantum random access memory, the quantum adder circuit Oracle $O_{add}$ and the second data conversion quantum circuit *Oracle* $O_{convert2}$ set in sequence;
obtaining target states of the grid cells according to the target values of the state parameters.

10. The method according to claim 9, wherein obtaining the target states of the grid cells according to the target values of the state parameters specifically comprises:

> constructing a third data conversion quantum circuit *Oracle O$_{convert3}$*, wherein *Oracle O$_{convert3}$* is configured to implement $|i\rangle|0\rangle U^{n+1}\rangle \rightarrow U^{n+1}|i\rangle$;
> obtaining the target state of each grid cell by converting the target values of the state parameters into $U^{n+1}$ encoded by amplitudes of the quantum states using the third data conversion quantum circuit Oracle O$_{convert3}$.

11. A computational fluid dynamics simulation apparatus based on a quantum algorithm, comprising:

> a grid quantum circuit construction module configured for, in a computational fluid dynamics analysis process using a finite volume method, constructing, for each grid cell in a discretized numerical grid for fluid movement, a first quantum circuit representing coordinate information of the grid cell, a second quantum circuit representing state parameters of the grid cell, wherein the state parameters of the grid cell are stored in a quantum random access memory, and the quantum random access memory can operate addresses and data in a quantum superposition state;
> a parameter quantum circuit construction module configured for constructing a third quantum circuit representing parameters of a linear system equation that represents a change of a fluid state of the grid cell based on the first quantum circuit, the second quantum circuit and the quantum random access memory;
> a target state obtaining module configured for solving, for all grid cells, the linear system equations of the grid cells based on the third quantum circuit, to obtain fluid states represented by the state parameters of the linear system equations of the grid cells as target states of the grid cells when the fluid states of the grid cells tend to be stable.

12. The apparatus according to claim 11, wherein the first quantum circuit comprises a first Oracle and a second Oracle; the first Oracle is configured to extract the number of adjacent grids of a specified grid cell, and the second Oracle is configured to extract coordinate information of the grid cell.

13. The apparatus according to claim 11, wherein the second quantum circuit comprises: a second analog state quantum circuit that extracts the state parameters of the grid cell through amplitudes of quantum states, and a second digital state quantum circuit that extracts the state parameters of the grid cell through eigenstates of quantum states.

14. The apparatus according to claim 11, wherein a preset mapping relationship between addresses and data is stored in the quantum random access memory, wherein the addresses are encoded in a first superposition state, each eigenstate in the first superposition state corresponds to one piece of address information, the data is encoded in a second superposition state, and each eigenstate in the second superposition state corresponds to one piece of data information.

15. The apparatus according to claim 12, wherein the linear system equation is: $A^n \Delta U^n = b^n$, wherein $\Delta U^n = U^{n+1} - U^n$; wherein, n represents a $n^{th}$ moment of recording a fluid state; $U^n$ represents fluid states of the grid cells at the $n^{th}$ moment, $U^n = \{U_i\}$, $i = 0,1,2, ..., N — 1$, and $U_i$ represents a fluid state of a grid cell i; $A^n$ represents a coefficient matrix at the $n^{th}$ moment, and $A^n = \{A(U^n,\hat{M})\}$, representing that $A^n$ is a function associated with $U^n$, $\hat{M}$, $b^n$ represents a residual quantity at the $n^{th}$ moment, and $b^n = \{b(U^n,\hat{M})\}$, representing that $b^n$ is a function associated with $U^n$, $\hat{M}$, N is the number of grid cells in total and $\hat{M}$ is coordinate information of the grid cells; the parameters of the linear system equation comprise the coefficient matrix $A^n$ at a current moment and the residual quantity $b^n$ at the current moment; the third quantum circuit comprises *Oracle O$_A$* corresponding to the coefficient matrix $A^n$ and *Oracle O$_b$* corresponding to the residual quantity $b^n$; the *Oracle O$_A$* is configured to extract an element $A_{i'j'}$ of the coefficient matrix $A^n$ at the current $n^{th}$ moment, $A^n = \{A_{i'j'}\}$, $i' = 4i + i_1$, $j' = 4j + j_1$, $i,j = 0,1,2, ..., N - 1$; $i_1$ and $j_1$ are integers from 0 to 3; for a $j^{th}$ adjacent grid cell of the grid cell i, *Oracle O$_A$* has an effect of $O_A |i\rangle|j\rangle = |i\rangle|j\rangle|A_{i'j'}|$; the Oracle O$_b$ is configured to extract an element $b_i$ of the residual quantity $b^n$ at the current $n^{th}$ moment, wherein, $b_i$ represents a residual quantity of the grid cell i; $b^n = \{bi\}$, $i = 0,1,2, ..., N - 1$, for the grid cell i, the Oracle O$_b$ has an effect of $O_b |0\rangle = \Sigma_i b_i |i\rangle$.

16. The apparatus according to claim 15, wherein the parameter quantum circuit construction module is specifically configured for:

> for the residual quantity $b_i$ corresponding to the grid cell *i* contained in $b^n$, obtaining related grid cells of the grid cell i;

obtaining coordinate information of the related grid cells as first related coordinate information $X_{related}$ based on the second Oracle;

obtaining state parameter information corresponding to the related grid cells as a first related state parameter $U_{relaed}$ based on the second quantum circuit and the quantum random access memory;

constructing a first sub-quantum circuit $Oracle\ O_{b1}$ for simultaneously encoding the first related coordinate information and the first related state parameter, wherein $Oracle\ O_{b1}$ is configured to implement:

$$|i\rangle|0\rangle|0\rangle \rightarrow |i\rangle|U_{related}\rangle|X_{related}\rangle;$$

obtaining $b_i(X_{related},\ U_{related})$ based on $U_{related}$ and $X_{related}$;

constructing a second sub-quantum circuit Oracle $O_{b2}$ for encoding $b_i(X_{related},\ U_{related})$, wherein $Oracle\ O_{b2}$ is configured to implement $|i\rangle|U_{related}\rangle|X_{related}\rangle|0\rangle\rightarrow|i\rangle|U_{related}\rangle|X_{related}\rangle|b_i\rangle$;

constructing a third sub-quantum circuit $Oracle\ O_{b3}$, wherein the third sub-quantum circuit $Oracle\ O_{b3}$ is a transposed conjugate quantum circuit of the first sub-quantum circuit Oracle $O_{b1}$, and $Oracle\ O_{b3}$ is configured to implement $|i\rangle|U_{related}\rangle|X_{related}\rangle|b_i\rangle|i\rangle|0\rangle|0\rangle|b_i\rangle$;

constructing a fourth sub-quantum circuit $Oracle\ O_{b4}$ for quantum state transformation, wherein $Oracle\ O_{b4}$ is configured to implement $|i\rangle|0\rangle|0\rangle|b_i\rangle \rightarrow bi|i\rangle$;

constructing $Oracle\ O_b$ based on the first sub-quantum circuit $Oracle\ O_{b1}$, the second sub-quantum circuit $Oracle\ O_{b2}$, the third sub-quantum circuit $Oracle\ O_{b3}$ and the fourth sub-quantum circuit $Oracle\ O_{b4}$.

17. The apparatus according to claim 15 or 16, wherein the parameter quantum circuit construction module is specifically configured for:

for a coefficient matrix $A_{i'j'}$ contained in $A^n$, obtaining a grid number $g(i,j)$ of the $j^{th}$ adjacent grid cell of the grid cell i based on the first Oracle, wherein $g(i,j)$ is a function of the state parameters and the coordinate information of the grid cell;

constructing a column number $f(i,j)$ of a $j^{th}$ non-zero element in an $i^{th}$ row of $A_{i'j'}$ based on the grid number $g(i,j)$

of the $j^{th}$ adjacent grid cell of the grid cell i; wherein $f(i,j)=4g\left(\left\lfloor\frac{i}{4}\right\rfloor,\left\lfloor\frac{j}{4}\right\rfloor\right)+j\%4$ ; wherein $f(i,j)$ is a function of the state parameters and the coordinate information of the grid cell, % represents a remainder operation, and ⌊ ⌋ represents a RoundDown symbol;

obtaining $A_{ij}$ according to $f(i,j)$, wherein:

$$A_{i'j'} = A_{4i_0+i_1,4j_0+j_1} = f_{i_0,i_1,j_0,j_1}(U_{i_0},U_{j_0},X_{i_0},X_{j_0});$$

$i_0, j_0$, respectively represent the serial numbers of the grid cells $i, j$, each grid cell has four state parameters, $i_1, j_1$ range from 0 to 3, and respectively represent four state parameters of the grid cells $i_0, j_0$; $U_{i0}$ represents state parameters in the grid cell $i_0$, $U_{i0}$ represents state parameters in the grid cell $j_0$; $X_i 0$ represents the position coordinates related to the grid cell $i_0$, $X_{j0}$ represents the position coordinates related to the grid cell $j_0$;

for $i_0$ and $j_0$, extracting corresponding state parameters $U_{i0}$ and $U_{j0}$ thereof by using the quantum random access memory; and extracting corresponding coordinate information $X_{i0}$ and $X_{i0}$ thereof by using the second Oracle;

constructing a first sub-quantum circuit Oracle $O_{A1}$ for simultaneously encoding the coordinate information $X_{i0}$ and $X_{j0}$ and the state parameters $U_{i0}$ and $U_{j0}$ wherein Oracle $O_{A1}$ is configured to implement:

$$|i,j\rangle|0\rangle \rightarrow |4i_0 + i_1, 4j_0 + j_1\rangle|U_{i_0},U_{j_0},X_{i_0},X_{j_0}\rangle;$$

constructing a second sub-quantum circuit $Oracle\ O_{A2}$ for encoding $f_{i0,i1,j0,j1}(U_{i0},\ U_{i0},X_{i0},\ X_{j0})$, wherein $Oracle\ O_{A2}$ is configured to implement:

$$|4i_0 + i_1, 4j_0 + j_1\rangle|U_{i_0},U_{j_0},X_{i_0},X_{j_0}\rangle|0\rangle \rightarrow$$

$$|4i_0 + i_1, 4j_0 + j_1\rangle|U_{i_0},U_{j_0},X_{i_0},X_{j_0}\rangle|f_{i_0,i_1,j_0,j_1}(U_{i_0},U_{j_0},X_{i_0},X_{j_0})\rangle;$$

constructing a third sub-quantum circuit *Oracle $O_{A3}$*, wherein the third sub-quantum circuit *Oracle $O_{A3}$* is a transposed conjugate quantum circuit of the first sub-quantum circuit *Oracle $O_{A3}$*, and *Oracle $O_{A3}$* is configured to implement

$$|4i_0 + i_1, 4j_0 + j_1\rangle|U_{i_0}, U_{j_0}, X_{i_0}, X_{j_0}\rangle|f_{i_0, i_1, j_0, j_1}(U_{i_0}, U_{j_0}, X_{i_0}, X_{j_0})\rangle \rightarrow$$

$$\underline{|4i_0 + i_1, 4j_0 + j_1\rangle|0\rangle|f_{i_0, i_1, j_0, j_1}(U_{i_0}, U_{j_0}, X_{i_0}, X_{j_0})\rangle;}$$

constructing *Oracle $O_A$* based on the first sub-quantum circuit *Oracle $O_{A1}$*, the second sub-quantum circuit *Oracle $O_{A2}$* and the third sub-quantum circuit *Oracle $O_{A3}$*.

18. The apparatus according to claim 15, wherein the target state obtaining module comprises:

an iteration calculation submodule configured for, for all the grid cells, based on the linear system equations represented by the third quantum circuit, iterating the linear system equations starting from initial values of the state parameters of the grid cells until $b^n$ tends to 0, to obtain $\Delta U^n$ at that time;
a target state calculation submodule, configured for updating $U^n$ stored in the quantum random access memory according to the acquired $\Delta U^n$ to obtain $U^{n+1}$ as the target states of the grid cells.

19. The apparatus according to claim 18, wherein the $\Delta U^n$ is data in an analog encoded state with information encoded on an amplitude of a quantum state; the target state calculation submodule comprises:

a first construction unit for constructing a first data conversion quantum circuit *Oracle $O_{convert1}$*, wherein *Oracle $O_{convert1}$* is configured to implement:

$$\Delta U^n|i\rangle|0\rangle \rightarrow |i\rangle|\Delta U^n\rangle;$$

a state extraction unit for extracting $U^n$ from the quantum random access memory
a second construction unit for constructing a quantum adder circuit Oracle $O_{add}$, wherein Oracle $O_{add}$ is configured to implement:

$$|i\rangle|U^n\rangle|\Delta U\rangle \rightarrow |i\rangle|U^n\rangle|U^{n+1}\rangle;$$

a third construction unit for constructing a second data conversion quantum circuit *Oracle $O_{convert2}$*, wherein Oracle $O_{convert2}$ is configured to implement:

$$|i\rangle|U^n\rangle|U^{n+1}\rangle \rightarrow |i\rangle|0\rangle|U^{n+1}\rangle;$$

a target value determination unit for obtaining $|i\rangle|0\rangle|U^{n+1}\rangle$ as target values of the state parameters contained in the linear system equations, wherein $|i\rangle|0\rangle|U^{n+1}\rangle$ is encoded through eigenstates of the quantum states and encoded by the quantum circuits of the first data conversion quantum circuit Oracle $O_{convert1}$, the quantum random access memory, the quantum adder circuit Oracle $O_{add}$ and the second data conversion quantum circuit *Oracle $O_{convert2}$* set in sequence;
a target state determination unit for obtaining target states of the grid cells according to the target values of the state parameters.

20. The apparatus according to claim 19, wherein the target state determining unit is specifically configured for: constructing a third data conversion quantum circuit *Oracle $O_{convert3}$*, wherein *Oracle $O_{convert3}$* is configured to implement $|i\rangle|0\rangle|U^{n+1}\rangle \rightarrow U^{n+1}|i\rangle$; obtaining the target state of each grid cell by converting the target values of the state parameters into $U^{n+1}$ encoded by amplitudes of the quantum states using the third data conversion quantum circuit *Oracle $O_{convert3}$*.

21. A quantum computer device, comprising a quantum circuit, a device based on a quantum effect, and a quantum random access memory, wherein the quantum computer device performs the computational fluid dynamics simulation method based on a quantum algorithm according to any one of claims 1-10 at runtime.

22. A computer-readable storage medium having stored therein a computer program that, when executed by a processor, causes the processor to perform the computational fluid dynamics simulation method based on a quantum algorithm according to any one of claims 1 to 10.

C      B

P(a, b)

(*a*+1, b)

A

D

(*a*, b+1)

(*a*+1, b+1)

Fig. 1

(*a*,b−1)

(*a-1*,b−1)

(*a+1*,b−1)

(*a-1*,b)

(*a*,b)

(*a*+1,b)

(*a-1*,b+1)

(*a*,b+1)

(*a+1*,b+1)

Fig. 2

Fig. 3

| | |
|---|---|
| in a computational fluid dynamics analysis process using a finite volume method, constructing, for each grid cell in a discretized numerical grid for fluid movement, a first quantum circuit representing the coordinate information of the above-mentioned grid cell and a second quantum circuit representing the state parameters of the above-mentioned grid cell, wherein the state parameters of the above-mentioned grid cell are stored in a quantum random access memory, and the above-mentioned quantum random access memory can operate addresses and data in a quantum superposition state | S11 |
| constructing a third quantum circuit representing the parameters of a linear system equation that represents the change of the fluid state of the above grid cell based on the above first quantum circuit, the above second quantum circuit and the above quantum random access memory | S12 |
| solving, for all grid cells, the linear system equations of the above grid cells based on the above third quantum circuit, to obtain the fluid states represented by the state parameters of the linear system equations of the grid cells as the target states of the above grid cells when the fluid states of the above grid cells tend to be stable | S13 |

Fig. 4

$q_{m-1}$ — $H$

$q_{m-2}$ — $H$

...... 

$q_2$ — $H$

$q_1$ — $U_x$

$q_0$ — 

Fig. 5

$|i\rangle$ — $H$ ...... $H$ $H$

$|U_i\rangle$ — $m$ — $x_0$ $x_1$ $x_2$ $x_3$

Fig. 6

$|i\rangle$ — $m$ — $U_{related}$ & $x_{related}$ — Uncompute $U_{related}$ & $x_{related}$ — QDAC

$|0\rangle$ — $(C_b-1)q_f$ — $b_i$

$|0\rangle$ — $q_f$ —

Fig. 7

Fig. 8

Fig. 9

Fig. 10

Fig. 11

Fig. 12a

Fig. 12b

| Main parameter (the ith iteration) $U^i$ | Grid Cell Oracle $O_{adjacent}$ $O_{coor}$ |
|---|---|

Quantum pre-processing process

linear equation Oracle (the (i+1)th iteration)
$O_A^{i+1}$ $O_b^{i+1}$ $O_l^{i+1}$

Quantum linear solver

Main parameter change (the (i+1)th iteration)
$\Delta U^{i+1}$

Quantum post-processing process

Main parameter (the (i+1)th iteration)
$U^{i+1}$

Fig. 13

Fig. 14

Fig. 15

Fig. 16a

Fig. 16b

Fig. 16c

$|j\rangle$ ⟶ $\log\lceil 2N\rceil$

$|0\rangle$ ⟶ $\log\lceil N\rceil$ $H$ $O_l$ $O_H$ $O_H$

$|0\rangle$ ⟶ $q_f$

$|0\rangle$ ⟶ $M$

Fig. 17a

$|\phi_j\rangle$ ⋯ ⋯ $X$ $Z$ $X$

Fig. 17b

$|j\rangle$ ⟶ $\log\lceil 2N\rceil$ $T^\dagger$ $T$

$|0\rangle$ ⟶ $\log\lceil 2N\rceil$ $K$ $e^{i\pi}$

Fig. 17c

| grid quantum circuit construction module | 201 |
| parameter quantum circuit construction module | 202 |
| target state obtaining module | 203 |

Fig. 18

## INTERNATIONAL SEARCH REPORT

| International application No. |
|---|
| **PCT/CN2020/140833** |

**A.    CLASSIFICATION OF SUBJECT MATTER**

G06F 30/28(2020.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 计算流体动力学, 矩阵, 求逆, 有限体积法, 流体运动, 网格单元, 量子, CFD, Computational Fluid Dynamics, quantum computation, finite volume method

**C.    DOCUMENTS CONSIDERED TO BE RELEVANT**

| Category* | Citation of document, with indication, where appropriate, of the relevant passages | Relevant to claim No. |
|---|---|---|
| A | 卢风顺 等 (LU, Fengshun et al.). "量子计算及其在空气动力学中的应用前景 (Quantum Computing and Its Application Prospect in Aerodynamics)" 航空学报 (Acta Aeronautica et Astronautic Sinica), Vol. 41, No. 4, 25 April 2020 (2020-04-25), sections 1.2 and 4.1, and figure 4 | 1-22 |
| A | HANN, Connor T. et al. "Hardware-efficient quantum random access memory with hybrid quantum acoustic systems" arXiv:1906.11340, 09 January 2020 (2020-01-09), pp. 1-24 | 1-22 |
| A | CN 106780747 A (NORTHWESTERN POLYTECHNICAL UNIVERSITY) 31 May 2017 (2017-05-31) entire document | 1-22 |
| A | CN 103559740 A (NATIONAL KEY LAB OF AERODYNAMICS) 05 February 2014 (2014-02-05) entire document | 1-22 |
| A | CN 104331271 A (LI, Hua et al.) 04 February 2015 (2015-02-04) entire document | 1-22 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 April 2021** | **29 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2020/140833** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2019277317 A1 (SOLITON HOLDINGS CORPORATION, DELAWARE CORPORATION et al.) 12 September 2019 (2019-09-12) entire document | 1-22 |

Form PCT/ISA/210 (second sheet) (January 2015)

**INTERNATIONAL SEARCH REPORT**
Information on patent family members

International application No.

**PCT/CN2020/140833**

| Patent document cited in search report | | | Publication date (day/month/year) | Patent family member(s) | Publication date (day/month/year) |
|---|---|---|---|---|---|
| CN | 106780747 | A | 31 May 2017 | None | |
| CN | 103559740 | A | 05 February 2014 | None | |
| CN | 104331271 | A | 04 February 2015 | None | |
| US | 2019277317 | A1 | 12 September 2019 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010771592